(19) **Europäisches Patentamt / European Patent Office / Office européen des brevets**

(11) **EP 4 676 127 A1**

(12) **EUROPEAN PATENT APPLICATION**
published in accordance with Art. 153(4) EPC

(43) Date of publication:
**07.01.2026 Bulletin 2026/02**

(21) Application number: **24785318.7**

(22) Date of filing: **05.04.2024**

(51) International Patent Classification (IPC):
*H04W 52/02* (2009.01)   *H04B 7/06* (2006.01)
*H04W 72/231* (2023.01)   *H04L 5/00* (2006.01)

(52) Cooperative Patent Classification (CPC):
**H04B 7/06; H04L 5/00; H04W 52/02; H04W 72/231**

(86) International application number:
**PCT/KR2024/004524**

(87) International publication number:
**WO 2024/210621 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.04.2023 KR 20230045762**

(71) Applicant: SAMSUNG ELECTRONICS CO., LTD.
Yeongtong-gu
Suwon-si, Gyeonggi-do 16677 (KR)

(72) Inventors:
- JANG, Youngrok
  Suwon-si, Gyeonggi-do 16677 (KR)
- ABEBE, Ameha Tsegaye
  Suwon-si, Gyeonggi-do 16677 (KR)
- YI, Junyung
  Suwon-si, Gyeonggi-do 16677 (KR)
- LIM, Seongmok
  Suwon-si, Gyeonggi-do 16677 (KR)
- JI, Hyoungju
  Suwon-si, Gyeonggi-do 16677 (KR)

(74) Representative: **Nederlandsch Octrooibureau**
P.O. Box 29720
2502 LS The Hague (NL)

(54) **CHANNEL STATE INFORMATION CONFIGURATION METHOD AND DEVICE FOR NETWORK ENERGY SAVING IN WIRELESS COMMUNICATION SYSTEM**

(57)   The present disclosure relates to a 5G or 6G communication system for supporting higher data transmission rates. The present disclosure relates to operations of a terminal and a base station in a wireless communication system. Specifically, the present disclosure describes a channel state information report method and device for network energy saving in a wireless communication system.

FIG. 13

## Description

[Technical Field]

The disclosure relates to an operation of a terminal and a base station in a wireless communication system. Specifically, the disclosure relates to a channel state information configuration method for network energy saving in a wireless communication system, and a device capable of performing same.

[Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

[Disclosure]

[Technical Problem]

Embodiments set forth herein are to provide a device and a method capable of effectively providing services in a wireless communication system. In particular, a network energy saving method and a network energy saving device for reducing power consumption of a base station are provided.

[Technical Solution]

In order to achieve the task described above, the disclosure provides a method performed by a terminal in a communication system, the method including receiving configuration information for channel state information (CSI) reporting from a base station, the configuration information including information on channel state information-reference signal (CSI-RS) resources and a CSI report configuration based on a subset of CSI-RS ports of all CSI-RS ports of the CSI-RS resources, obtaining CSI based on the subset CSI-RS ports of the CSI-RS resources, and transmitting the obtained CSI to the base station.

In addition, a method performed by a base station in a communication system includes transmitting configuration information for channel state information (CSI) reporting to a terminal, the configuration information including information on channel state information-reference signal (CSI-RS) resources and a CSI report configuration based on a subset of CSI-RS ports of all CSI-RS ports of the CSI-RS resources, and receiving CSI from the terminal, wherein the CSI is based on the subset CSI-RS ports of the CSI-RS resources.

In addition, a terminal in a communication system includes multiple transceivers, and a controller including one or more processors connected to the multiple transceivers, wherein the controller is configured to receive configuration information for channel state information (CSI) reporting from a base station, the configuration information including information on channel state information-reference signal (CSI-RS) resources and a CSI report configuration based on a subset of CSI-RS ports of all CSI-RS ports of the CSI-RS resources, obtain CSI based on the subset CSI-RS ports of the CSI-RS resources, and transmit the obtained CSI to the base station.

In addition, a base station in a communication system includes multiple transceivers, and a controller including one or more processors connected to the multiple transceivers, wherein the controller is configured to transmit configuration information for channel state information (CSI) reporting to a terminal, the configuration information including information on channel state information-reference signal (CSI-RS) resources and a CSI report configuration based on a subset of CSI-RS ports of all CSI-RS ports of the CSI-RS resources, and receive CSI from the terminal, and wherein the CSI is based on the subset CSI-RS ports of the CSI-RS resources.

[Advantageous Effects]

Embodiments set forth herein provide a device and a method capable of effectively providing services in a wireless communication system. In particular, a base station can effectively reduce energy consumption by effectively performing network energy saving.

[Description of Drawings]

FIG. 1 illustrates a basic structure of a time-frequency domain in a wireless communication system.
FIG. 2 illustrates a structure of a frame, a subframe, and a slot in a wireless communication system.
FIG. 3 illustrates an example of a bandwidth part configuration in a wireless communication system.
FIG. 4 illustrates an example of an aperiodic channel state information (CSI) reporting method.
FIG. 5 illustrates an example of a control resource set configuration of a downlink control channel in a wireless communication system.
FIG. 6 illustrates an example of a structure of a downlink control channel in a wireless communication system.
FIG. 7 is a diagram illustrating an example of a structure of aperiodic CSI report signaling which may be configured for a UE through higher layer signaling according to an embodiment of the disclosure.
FIG. 8 is a diagram illustrating an example of aperiodic CSI report and aperiodic CSI-RS triggering situations and restrictions according to an embodiment of the disclosure.

FIG. 9 is a diagram illustrating an example of transmission of multiple overlapping CSI-RS resources according to an embodiment of the disclosure.

FIG. 10 is a diagram illustrating an example of an operation of a terminal according to an embodiment of the disclosure.

FIG. 11 is a diagram illustrating an example of an operation of a base station according to an embodiment of the disclosure.

FIG. 12 illustrates an example of a structure of a UE in a wireless communication system according to an embodiment of the disclosure.

FIG. 13 illustrates an example of a structure of a base station in a wireless communication system according to an embodiment of the disclosure.

[Mode for Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure. The contents of the disclosure may be applied to FDD and TDD systems.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink and employs a single carrier frequency division multiple access (SC-FDMA) scheme in an uplink. The uplink refers to a radio link via which a UE transmits data or control signals to a base station, and the downlink refers to a radio link via which the base station transmits data or control signals to the UE. The above multiple access scheme separates data or control information of respective users by allocating and operating time-frequency resources for carrying the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5 ms, and also requires a packet error rate of $10^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

In the following description, the term "a/b/c" may be understood as at least one of a or b or c.

Hereinafter, a frame structure of a 5G system will be described in more detail with reference to the accompanying drawings.

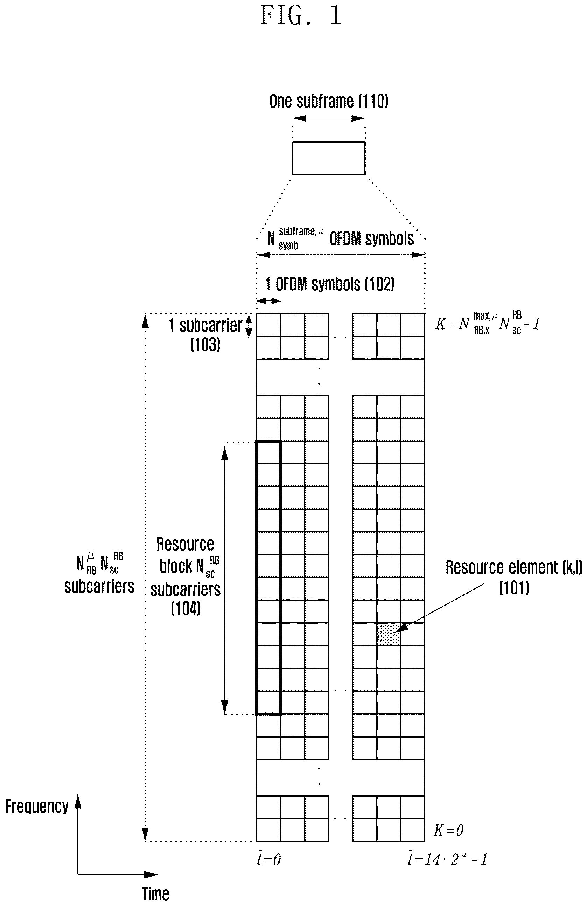

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, $N_{SC}^{RB}$ (e.g., 12) consecutive REs may constitute one resource block (RB) 104. In the time domain, one subframe 110 may include multiple OFDM symbols 102. For example, the length of one subframe may be 1ms.

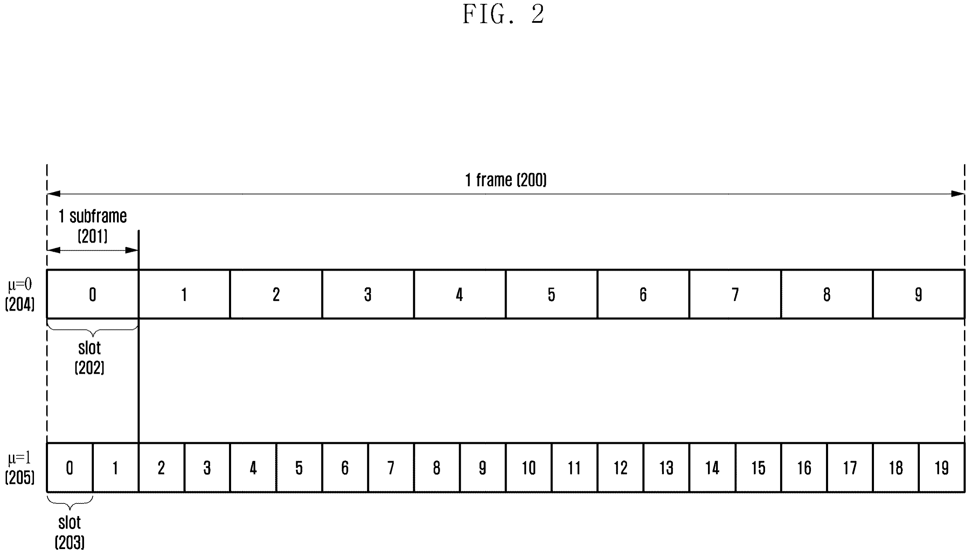

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values $\mu$ for the subcarrier spacing 204 or 205. The example of FIG. 2 shows the case of $\mu$=0 (2-04) and the case of $\mu$=1 (205) as a configuration value for a subcarrier spacing. In the case of $\mu$=0 (204), one subframe 201 may include one slot 202, and in the case of $\mu$=1 (205), one subframe 201 may include two slots 203. That is, the number of slots per one subframe $N_{slot}^{subframe,\mu}$ may differ depending on the subcarrier spacing configuration value $\mu$, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

Next, a bandwidth part (BWP) configuration in a 5G communication system will be described in detail with reference to the accompanying drawings.

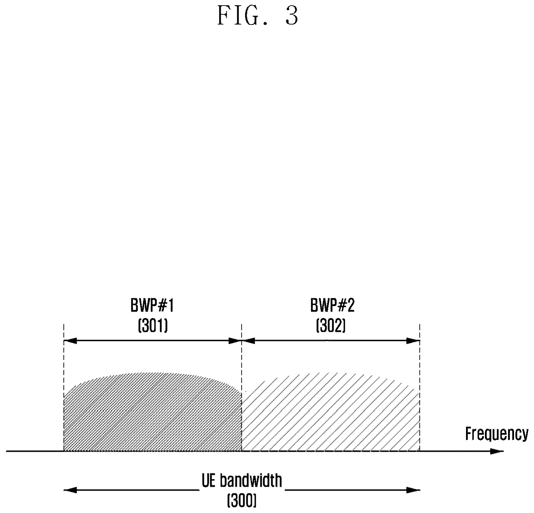

FIG. 3 illustrates an example of a bandwidth part configuration in a wireless communication system according to an embodiment of the disclosure;

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

[Table 2]

| BWP ::= | SEQUENCE { |
|---|---|
| bwp-Id (bandwidth part identifier) | BWP-Id, |
| locationAndBandwidth (bandwidth part location) | INTEGER (1..65536), |
| subcarrierSpacing (subcarrier spacing) | ENUMERATED {n0, n1, n2, n3, n4, n5}, |
| cyclicPrefix (cyclic prefix) | ENUMERATED { extended } |
| } | |

Obviously, the above example is not limiting, and various parameters related to the bandwidth part may be configured for the UE, in addition to the above configuration information. The base station may transfer the configuration information to the UE through higher layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control resource region #0 through the MIB. In addition, the base station may notify the UE of configuration information regarding the monitoring cycle and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0. The UE may receive, through the configured initial bandwidth part, a PDSCH through which an SIB is transmitted. The initial bandwidth part may be used not only for the purpose of receiving the SIB, but also for other system information (OSI), paging, random access, or the like.

In NR systems (hereinafter, interchangeably referred to as NR), there is a CSI framework used for a base station to indicate channel state information (CSI) measurement and reporting to a UE. The CSI framework of NR may be configured by at least two elements including a resource configuration (resource setting) and a report configuration (report setting). The report configuration may have an association relationship with the resource configuration by referring to at least one ID of the resource configuration.

The resource configuration may include information related to a reference signal (RS) used for the UE to measure channel state information. The base station may configure at least one resource configuration for the UE. For example, the base station and the UE may transmit and receive signaling information as shown in Table 3 to transfer information on the resource configuration.

[Table 3]

```
-- ASN1START
-- TAG-CSI-RESOURCECONFIG-START

CSI-ResourceConfig ::=          SEQUENCE {
csi-ResourceConfigId            CSI-ResourceConfigId,
csi-RS-ResourceSetList          CHOICE {
nzp-CSI-RS-SSB                    SEQUENCE {
```

```
nzp-CSI-RS-ResourceSetList          SEQUENCE     (SIZE     (1..maxNrofNZP-CSI-
RSResourceSetsPerConfig)) OF NZP-CSI-RS-ResourceSetId
OPTIONAL, -- Need R
csi-SSB-ResourceSetList             SEQUENCE     (SIZE     (1..maxNrofCSI-SSB-
ResourceSetsPerConfig)) OF CSI-SSB-ResourceSetId
OPTIONAL   -- Need R
},
csi-IM-ResourceSetList              SEQUENCE     (SIZE     (1..maxNrofCSI-IM-
ResourceSetsPerConfig)) OF CSI-IM-ResourceSetId
},
bwp-Id       BWP-Id,
resourceType     ENUMERATED { aperiodic, semiPersistent, periodic },
...
}
-- TAG-CSI-RESOURCECONFIG-STOP
-- ASN1STOP
```

In Table 3, the signaling information CSI-ResourceConfig includes information on each resource configuration. According to the signaling information, each resource configuration may include a resource configuration index (csi-ResourceConfigId), a BWP index (bwp-ID), a time axis transmission configuration of a resource (resourceType), or a resource set list (csi-RS-ResourceSetList) including at least one resource set. The time axis transmission configuration of a resource may be configured as aperiodic transmission, semi-persistent transmission, or periodic transmission. The resource set list may be a set including resource sets for channel measurement, or a set including resource sets for interference measurement. If the resource set list is a set including resource sets for channel measurement, each resource set may include at least one resource, and the at least one resource may correspond to an index of a CSI reference signal (CSI-RS) resource or a synchronization/broadcast channel block (synchronization signal/physical broadcast channel block, SS/PBCH block, SSB). If the resource set list is a set including resource sets for interference measurement, each resource set may include at least one interference measurement resource (CSI interference measurement, CSI-IM).

For example, if a resource set includes a CSI-RS, the base station and the UE may transmit and receive signaling information as shown in Table 4 to transfer information on the resource set.

[Table 4]

```
-- ASN1START
-- TAG-NZP-CSI-RS-RESOURCESET-START
NZP-CSI-RS-ResourceSet ::=          SEQUENCE {
nzp-CSI-ResourceSetId               NZP-CSI-RS-ResourceSetId,
nzp-CSI-RS-Resources                SEQUENCE (SIZE (1..maxNrofNZP-CSI-
RS-ResourcesPerSet)) OF NZP-CSI-RS-ResourceId,
```

```
repetition   ENUMERATED { on, off }        OPTIONAL,    -- Need S
aperiodicTriggeringOffset   INTEGER(0..6)       OPTIONAL,    -- Need S
trs-Info        ENUMERATED {true}               OPTIONAL,    -- Need R
...
}
-- TAG-NZP-CSI-RS-RESOURCESET-STOP
-- ASN1STOP
```

The signaling information NZP-CSI-RS-ResourceSet in Table 4 includes information on each resource set. According to the signaling information, each resource set may include at least information on a resource set index (nzp-CSI-ResourceSetId) or a set (nzp-CSI-RS-Resources) of the indexes of the included CSI-RSs. Further, each resource set may include a part of information (repetition) on a spatial domain transmission filter of the included CSI-RS resources, or information (trs-Info) relating to whether the included CSI-RS resources have a tracking purpose.

A CSI-RS may be the most representative reference signal included in a resource set. The base station and the UE may transmit and receive signaling information as shown in Table 5 to transfer information on a CSI-RS resource.

[Table 5]

```
-- ASN1START
-- TAG-NZP-CSI-RS-RESOURCE-START
NZP-CSI-RS-Resource ::=            SEQUENCE {
nzp-CSI-RS-ResourceId              NZP-CSI-RS-ResourceId,
resourceMapping                    CSI-RS-ResourceMapping,
powerControlOffset                 INTEGER (-8..15),
powerControlOffsetSS                       ENUMERATED{db-3, db0, db3, db6}
OPTIONAL,     -- Need R
scramblingID                       ScramblingId,
periodicityAndOffset                       CSI-ResourcePeriodicityAndOffset
OPTIONAL,     -- Cond PeriodicOrSemiPersistent
qcl-InfoPeriodicCSI-RS                                         TCI-StateId
OPTIONAL,     -- Cond Periodic
...
}
-- TAG-NZP-CSI-RS-RESOURCE-STOP
-- ASN1STOP
```

The signaling information NZP-CSI-RS-Resource in Table 5 may include information on each CSI-RS. The information included in the signaling information NZP-CSI-RS-Resource may have the following meanings.

- nzp-CSI-RS-ResourceId: An index of a CSI-RS resource
- resourceMapping: Resource mapping information of a CSI-RS resource
- powerControlOffset: A ratio between PDSCH energy per RE (EPRE) and CSI-RS EPRE
- powerControlOffsetSS: A ratio between SS/PBCH block EPRE and CSI-RS EPRE
- scramblingID: A scrambling index of a CSI-RS sequence
- periodicityAndOffset: A transmission period and a slot offset of a CSI-RS resource
- qcl-InfoPeriodicCSI-RS: TCI-state information when a corresponding CSI-RS is a periodic CSI-RS

resourceMapping included in the signaling information NZP-CSI-RS-Resource may indicate resource mapping information of a CSI-RS resource, and the resource mapping information may include frequency resource RE mapping, the number of ports, symbol mapping, code division multiplexing (CDM) type, frequency resource density, and frequency band mapping information. Each of the number of ports, frequency resource density, CDM type, and time-frequency axis RE mapping, which may be configured through the signaling information, may have a predetermined value for one of the rows shown in Table 6 below.

[Table 6]

| Row | Ports $X$ | Density $\rho$ | cdm-Type | $(\bar{k},\bar{l})$ | CDM group index $j$ | $k'$ | $l'$ |
|---|---|---|---|---|---|---|---|
| 1 | 1 | 3 | No CDM | $(k_0,l_0)$, $(k_0+4,l_0)$, $(k_0+8,l_0)$ | 0,0,0 | 0 | 0 |
| 2 | 1 | 1, 0.5 | No CDM | $(k_0,l_0)$ | 0 | 0 | 0 |
| 3 | 2 | 1, 0.5 | FD-CDM2 | $(k_0,l_0)$ | 0 | 0, 1 | 0 |
| 4 | 4 | 1 | FD-CDM2 | $(k_0,l_0)$, $(k_0 + 2,l_0)$ | 0,1 | 0, 1 | 0 |
| 5 | 4 | 1 | FD-CDM2 | $(k_0,l_0)$, $(k_0,l_0 + 1)$ | 0,1 | 0, 1 | 0 |
| 6 | 8 | 1 | FD-CDM2 | $(k_0,l_0)$,$(k_1,l_0)$,$(k_2,l_0)$,$(k_3,l_0)$ | 0,1,2,3 | 0, 1 | 0 |
| 7 | 8 | 1 | FD-CDM2 | $(k_0,l_0)$,$(k_1,l_0)$,$(k_0,l_0 +1)$,$(k_1,l_0 +1)$ | 0,1,2,3 | 0, 1 | 0 |
| 8 | 8 | 1 | CDM4 (FD2,TD2 ) | $(k_0,l_0)$,$(k_1,l_0)$ | 0,1 | 0, 1 | 0, 1 |
| 9 | 12 | 1 | FD-CDM2 | $(k_0,l_0)$, $(k_1,l_0)$, $(k_2,l_0)$, $(k_3,l_0)$, $(k_4,l_0)$, $(k_5,l_0)$ | 0,1,2,3,4,5 | 0, 1 | 0 |
| 10 | 12 | 1 | CDM4 (FD2,TD2 ) | $(k_0,l_0)$,$(k_1,l_0)$,$(k_2,l_0)$ | 0,1,2 | 0, 1 | 0, 1 |

(continued)

| Row | Ports $X$ | Density $\rho$ | cdm-Type | $(\bar{k},\bar{l})$ | CDM group index $j$ | k' | l' |
|---|---|---|---|---|---|---|---|
| 11 | 16 | 1, 0.5 | FD-CDM2 | $(k_0,l_0),(k_1,l_0),(k_2,l_0),(k_3,l_0),(k_0,l_0+1),(k_1,l_0+1),(k_2,l_0+1),(k_3,l_0+1)$ | 0,1,2,3, 4,5,6,7 | 0, 1 | 0 |
| 12 | 16 | 1, 0.5 | CDM4 (FD2,TD2 ) | $(k_0,l_0), (k_1,l_0), (k_2,l_0), (k_3,l_0)$ | 0,1,2,3 | 0, 1 | 0, 1 |
| 13 | 24 | 1, 0.5 | FD-CDM2 | $(k_0,l_0),(k_1,l_0),(k_2,l_0),(k_0,l_0+1),(k_1,l_0+1),(k_2,l_0+1), (k_0,l_1),(k_1,l_1),(k_2,l_1),(k_0,l_1+1),(k_1,l_1+1),(k_2,l_1+1)$ | 0,1,2,3,4,5, 6,7,8,9,10,11 | 0, 1 | 0 |
| 14 | 24 | 1, 0.5 | CDM4 (FD2,TD2 ) | $(k_0,l_0), (k_1,l_0), (k_2,l_0), (k_0,l_1), (k_1,l_1), (k_2,l_1)$ | 0,1,2,3,4,5 | 0, 1 | 0, 1 |
| 15 | 24 | 1, 0.5 | CDM8 (FD2,TD4 ) | $(k_0,l_0), (k_1,l_0), (k_2,l_0)$ | 0,1,2 | 0, 1 | 0, 1, 2, 3 |
| 16 | 32 | 1, 0.5 | FD-CDM2 | $(k_0,l_0),(k_1,l_0),(k_2,l_0),(k_3,l_0), (k_0,l_0+1), (k_1,l_0+1), (k_2,l_0+1), (k_3,l_0+1), (k_0,l_1), (k_1,l_1), (k_2,l_1), (k_3,l_1), (k_0,l_1+1), (k_1,l_1+1), (k_2,l_1+1), (k_3,l_1+1)$ | 0,1,2,3, 4,5,6,7, 8,9,10,11, 12,13,14,15 | 0, 1 | 0 |
| 17 | 32 | 1, 0.5 | CDM4 (FD2,TD2 ) | $(k_0,l_0), (k_1,l_0), (k_2,l_0), (k_3,l_0), (k_0,l_1), (k_1,l_1), (k_2,l_1), (k_3,l_1)$ | ) 0, 1,2,3,4,5,6, 7 | 0, 1 | 0, 1 |
| 18 | 32 | 1, 0.5 | CDM8 (FD2,TD4 ) | $(k_0,l_0), (k_1,l_0), (k_2,l_0), (k_3,l_0)$ | 0,1,2,3 | 0, 1 | 0,1 ,2, 3 |

Table 6 shows a frequency resource density, a CDM type, frequency and time axis start positions $(\bar{k},\bar{l})$ of a CSI-RS component RE pattern, and the number (k') of frequency axis REs and the number (1') of time axis REs of the CSI-RS component RE pattern, which may be configured according to the number (X) of CSI-RS ports. The CSI-RS component RE pattern may be a basic unit for configuring a CSI-RS resource. The CSI-RS component RE pattern may be configured by YZ number of REs through Y=1+max(k') number of REs on the frequency axis and Z=1+max(l') number of REs on the time axis. If the number of CSI-RS ports is 1, the position of a CSI-RS RE may be designated in a physical resource block (PRB) without restriction on subcarriers, and may be designated by a bitmap having 12 bits. If the number of CSI-RS ports is {2, 4, 8, 12, 16, 24, 32}, and Y is equal to 2, the position of a CSI-RS RE may be designated at every two subcarriers in a PRB, and may be designated by a bitmap having 6 bits. If the number of CSI-RS ports is 4, and Y is equal to 4, the position of a CSI-RS RE may be designated at every four subcarriers in a PRB, and may be designated by a bitmap having 3 bits. Similarly, the position of a time axis RE may be designated by a bitmap having a total of 14 bits.

In NR, a report configuration may have an association relationship with a resource configuration by referring to at least one ID of the resource configuration, and the resource configuration(s) having an association relationship with the report configuration may provide configuration information including information on a reference signal for CSI measurement. If the resource configuration(s) having an association relationship with the report configuration are used for CSI measurement, measured CSI may be used for CSI reporting following a reporting method configured in the report configuration having the association relationship.

A report configuration may include configuration information related to a CSI reporting method. For example, the base station and the UE may transmit and receive signaling information as shown in Table 7 to transfer information on the report configuration.

[Table 7]

```
-- ASN1START
-- TAG-CSI-REPORTCONFIG-START
CSI-ReportConfig ::=      SEQUENCE {
reportConfigId          CSI-ReportConfigId,
carrier      ServCellIndex          OPTIONAL,      -- Need S
resourcesForChannelMeasurement              CSI-ResourceConfigId,
csi-IM-ResourcesForInterference   CSI-ResourceConfigId   OPTIONAL,   -- Need R
nzp-CSI-RS-ResourcesForInterference      CSI-ResourceConfigId      OPTIONAL,      --
Need R
reportConfigType        CHOICE {
periodic          SEQUENCE {
reportSlotConfig        CSI-ReportPeriodicityAndOffset,
pucch-CSI-ResourceList        SEQUENCE (SIZE (1..maxNrofBWPs)) OF PUCCH-CSI-
Resource
},
```

```
semiPersistentOnPUCCH          SEQUENCE {
reportSlotConfig        CSI-ReportPeriodicityAndOffset,
pucch-CSI-ResourceList      SEQUENCE (SIZE (1..maxNrofBWPs)) OF PUCCH-CSI-
Resource
},
semiPersistentOnPUSCH          SEQUENCE {
reportSlotConfig        ENUMERATED {sl5, sl10, sl20, sl40, sl80, sl160, sl320},
reportSlotOffsetList          SEQUENCE (SIZE (1.. maxNrofUL-Allocations)) OF
INTEGER(0..32),
p0alpha        P0-PUSCH-AlphaSetId
},
aperiodic       SEQUENCE {
reportSlotOffsetList            SEQUENCE (SIZE (1..maxNrofUL-Allocations)) OF
INTEGER(0..32)
}
},
reportQuantity          CHOICE {
none          NULL,
cri-RI-PMI-CQI         NULL,
cri-RI-i1        NULL,
cri-RI-i1-CQI         SEQUENCE {
pdsch-BundleSizeForCSI     ENUMERATED {n2, n4}    OPTIONAL      -- Need S
}
cri-RI-CQI            NULL,
cri-RSRP           NULL,
ssb-Index-RSRP         NULL,
cri-RI-LI-PMI-CQI       NUL
},
reportFreqConfiguration                    SEQUENCE {
cqi-FormatIndicator
...
}      OPTIONAL,     -- Need R
timeRestrictionForChannelMeasurements                ENUMERATED {configured,
notConfigured},
timeRestrictionForInterferenceMeasurements              ENUMERATED {configured,
notConfigured},
codebookConfig        CodebookConfig        OPTIONAL,     -- Need R
dummy          ENUMERATED {n1, n2}          OPTIONAL,     -- Need R
groupBasedBeamReporting            CHOICE {
...
},
cqi-Table    ENUMERATED {table1, table2, table3, spare1}    OPTIONAL,    -- Need R
subbandSize         ENUMERATED {value1, value2},
non-PMI-PortIndication             SEQUENCE    (SIZE    (1..maxNrofNZP-CSI-RS-
ResourcesPerConfig)) OF PortIndexFor8Ranks    OPTIONAL,     -- Need R
...,
[[
semiPersistentOnPUSCH-v1530              SEQUENCE {
reportSlotConfig-v1530              ENUMERATED {sl4, sl8, sl16}
```

```
}
OPTIONAL       -- Need R
]]
}
```

The signaling information CSI-ReportConfig in Table 7 includes information on each report configuration. The information included in the signaling information CSI-ReportConfig may have the following meanings.

- reportConfigId: A report configuration index
- carrier: An index of a serving cell
- resourcesForChannelMeasurement: An index of a resource configuration for channel measurement having an association relationship with a report configuration
- csi-IM-ResourcesForInterference: An index of a resource configuration for having a CSI-IM resource for interference measurement, the resource configuration having an association relationship with a report configuration
- nzp-CSI-RS-ResourcesForInterference: An index of a resource configuration for having a CSI-RS resource for interference measurement, the resource configuration having an association relationship with a report configuration
- reportConfigType: This indicates a time axis transmission configuration and a transmission channel of a channel report, and may have an aperiodic transmission, semi-persistent physical uplink control channel (PUCCH) transmission, semi-persistent physical uplink shared channel (PUSCH) transmission, or periodic transmission configuration.
- reportQuantity: This represents a type of reported CSI and may have a type of CSI when a channel report is not transmitted ("none") and a type of CSI when a channel report is transmitted ("cri-RI-PMI-CQI", "cri-RI-i1", "cri-RI-il-CQI", "cri-RI-CQI", "cri-RSRP", "ssb-Index-RSRP", and "cri-RI-LI-PMI-CQI"). An element included in the type of CSI indicates channel quality indicator (CQI), precoding matrix indicator (PMI), CSI-RS resource indicator (CRI), SS/PBCH block resource indicator (SSBRI), layer indicator (LI), rank indicator (RI), and/or reference signal received power (L1-RSRP).
- reportFreqConfiguration: This indicates that reported CSI includes only information on the entire band (wideband) or information on each subband, and if the reported channel information includes information on each subband, this may have configuration information on a subband including the CSI.
- timeRestrictionForChannelMeasurements: Presence or absence of a time axis restriction on a reference signal for channel measurement among reference signals referenced by reported CSI
- timeRestrictionForInterferenceMeasurements: Presence or absence of a time axis restriction on a reference signal for interference measurement among reference signals referenced by reported CSI
- codebookConfig: Codebook information referenced by reported CSI
- groupBasedBeamReporting: Presence or absence of beam grouping for a channel report
- cqi-Table: An index of a CQI table referenced by reported CSI
- subbandSize: An index indicating the subband size of CSI
- non-PMI-PortIndication: Port mapping information referenced when non-PMI CSI is reported

When the base station indicates CSI reporting through higher layer signaling or L1 signaling, the UE may perform CSI reporting by referring to configuration information described above included in an indicated report configuration.
The base station may indicate, to the UE, CSI reporting (CSI report) through higher layer signaling including RRC signaling or medium access control (MAC)-control element (CE) signaling or L1 signaling (e.g., common DCI, group-common DCI, or UE-specific DCI).
For example, the base station may indicate aperiodic CSI reporting to the UE through higher layer signaling or DCI using DCI format 0_1. The base station configures, through higher layer signaling, a parameter for aperiodic CSI reporting of the UE or multiple CSI report trigger states including a parameter for CSI reporting. The parameter or a CSI report trigger state for CSI reporting may include a slot interval between a PDCCH including DCI and a PUSCH including a CSI report or a set including possible slot intervals, a reference signal ID for channel state measurement, or a type of included CSI.
When the base station indicates some of multiple CSI report trigger states to the UE through DCI, the UE reports CSI according to a CSI report configuration of a report configuration configured in an indicated CSI report trigger state. The CSI reporting may be performed through a PUSCH scheduled by DCI format 0_1. Time axis resource allocation of a PUSCH including a CSI report of the UE may be performed through a slot interval from a PDCCH indicated through DCI, and an indication of a starting symbol and a symbol length in a slot for time axis resource allocation of the PUSCH. For example, it is possible to indicate the position of a slot on which a PUSCH including a CSI report of the UE is transmitted, through a slot interval from a PDCCH indicated through DCI, and indicate a starting symbol and a symbol length in the slot through a time domain resource assignment field of DCI.

For example, the base station may indicate a semi-persistent CSI reporting transmitted through a PUSCH to the UE through DCI using DCI format 0_1. The base station may activate or deactivate semi-persistent CSI reporting transmitted through a PUSCH, through DCI scrambled by an SP-CSI-RNTI. If semi-persistent CSI reporting is activated, the UE may periodically report CSI according to a configured slot interval. If semi-persistent CSI reporting is deactivated, the UE may stop periodic CSI reporting having been activated. The base station configures, through higher layer signaling, a parameter for semi-persistent CSI reporting of the UE or multiple CSI report trigger states including a parameter for semi-persistent CSI reporting. The parameter or a CSI report trigger state for CSI reporting may include a slot interval between a PDCCH including DCI indicating CSI reporting and a PUSCH including a CSI report or a set including possible slot intervals, a slot interval between a slot on which higher layer signaling indicating CSI reporting is activated and a PUSCH including a CSI report, a slot interval period of CSI reporting, or a type of included CSI.

When the base station activates some of multiple CSI report trigger states or some of multiple report configurations for the UE through higher layer signaling or DCI, the UE may report CSI according to a CSI report configuration configured in a report configuration included in an indicated CSI report trigger state or an activated report configuration. The CSI reporting may be performed through a PUSCH semipersistently scheduled by DCI format 0_1 scrambled by an SP-CSI-RNTI. Time axis resource allocation of a PUSCH including a CSI report of the UE may be performed through a slot interval period of CSI reporting, a slot interval from a slot on which higher layer signaling is activated or a slot interval from a PDCCH indicated through DCI, or an indication of a starting symbol and a symbol length in a slot for time axis resource allocation of the PUSCH. For example, it is possible to indicate the position of a slot on which a PUSCH including a CSI report of the UE is transmitted, through a slot interval from a PDCCH indicated through DCI, and indicate a starting symbol and symbol length in the slot through a time domain resource assignment field of DCI format 0_1 described above.

For example, the base station may indicate a semi-persistent CSI reporting transmitted through a PUCCH to the UE through higher layer signaling such as MAC-CE. The base station may activate or deactivate semi-persistent CSI reporting transmitted through a PUCCH, through the MAC-CE signaling. If semi-persistent CSI reporting is activated, the UE may periodically report CSI according to a configured slot interval. If semi-persistent CSI reporting is deactivated, the UE may stop periodic CSI reporting having been activated.

The base station configures a parameter for semi-persistent CSI reporting of the UE through higher layer signaling. The parameter for CSI reporting may include a PUCCH resource on which a CSI report is transmitted, a slot interval period of CSI reporting, or a type of included CSI. The UE may transmit the CSI report through a PUCCH. Alternatively, if the PUCCH for the CSI report overlaps with a PUSCH, the UE may transmit the CSI report through the PUSCH. It is possible to indicate the position of a PUCCH transmission slot including the CSI report through a slot interval period of CSI reporting configured through higher layer signaling, or a slot interval between a slot on which higher layer signaling is activated and a PUCCH including the CSI report, and indicate a starting symbol and a symbol length in the slot through a starting symbol and a symbol length to which a PUCCH resource configured through higher layer signaling is allocated.

For example, the base station may indicate periodic CSI reporting to the UE through higher layer signaling. The base station may activate or deactivate periodic CSI reporting through higher layer signaling including RRC signaling. If periodic CSI reporting is activated, the UE may periodically report CSI according to a configured slot interval. If periodic CSI reporting is deactivated, the UE may stop periodic CSI reporting having been activated. The base station configures a report configuration including a parameter for periodic CSI reporting of the UE through higher layer signaling.

The parameter for CSI reporting may include a PUCCH resource configuration for CSI reporting, a slot interval between a slot on which higher layer signaling indicating CSI reporting is activated and a PUCCH including a CSI report, a slot interval period of CSI reporting, a reference signal ID for channel state measurement, or a type of included CSI. The UE may transmit the CSI report through a PUCCH. Alternatively, if the PUCCH for the CSI report overlaps with a PUSCH, the UE may transmit the CSI report through the PUSCH. It is possible to indicate the position of a slot in which a PUCCH including the CSI report is transmitted, through a slot interval period of CSI reporting configured through higher layer signaling, or a slot interval between a slot on which higher layer signaling is activated and the PUCCH including the CSI report, and indicate a starting symbol and a symbol length in the slot through a starting symbol and a symbol length to which a PUCCH resource configured through higher layer signaling is allocated.

With regard to the aforementioned CSI report configurations (CSI-ReportConfig), each report configuration CSI-ReportConfig may be associated with one downlink (DL) bandwidth part identified by a higher-layer parameter bandwidth part identifier (bwp-id) given by the CSI resource configuration CSI-ResourceConfig associated with the corresponding report configuration. As a time domain reporting operation for each report configuration CSI-ReportConfig, "aperiodic", "semi-persistent", and "periodic" schemes may be supported, and these schemes may be configured for the UE by the base station via a reportConfigType parameter configured from a higher layer. A semi-persistent CSI report method supports a "PUCCH-based semi-persistent (semi-PersistentOnPUCCH)" method and a "PUSCH-based semi-persistent (semi-PersistentOnPUSCH)" method. In the case of the periodic or semi-persistent CSI report method, a PUCCH or PUSCH resource in which CSI is to be transmitted may be configured for the UE by the base station via higher-layer signaling. A periodicity and a slot offset of the PUCCH or PUSCH resource in which CSI is to be transmitted may be given by a numerology of an uplink bandwidth part configured for CSI report transmission. In the case of the aperiodic CSI report method, a PUSCH resource in which CSI is to be transmitted may be scheduled for the UE by the base station via L1 signaling (aforementioned DCI format 0_1).

With regard to the aforementioned CSI resource configurations (CSI-ResourceConfig), each CSI resource configuration CSI-ReportConfig may include S($\geq$1) CSI resource sets (e.g., given via a higher-layer parameter of csi-RS-ResourceSetList). A CSI resource set list may include a non-zero power (NZP) CSI-RS resource set and an SS/PBCH block set or may include a CSI-interference measurement (CSI-IM) resource set. Each CSI resource configuration may be located in a downlink bandwidth part identified by higher-layer parameter bwp-id and may be connected to CSI report configuration in the same downlink bandwidth part. A time domain operation of a CSI-RS resource in the CSI resource configuration may be configured to be one of "aperiodic", "periodic", or "semi-persistent" from the higher-layer parameter resourceType. With regard to the periodic or semi-persistent CSI resource configuration, the number of CSI-RS resource sets may be limited to S=1, and the configured periodicity and slot offset may be given based on a numerology of the downlink bandwidth part identified by bwp-id. One or more CSI resource configurations for channel or interference measurement may be configured for the UE by the base station via higher-layer signaling, and may include, for example, the following CSI resources.

- CSI-IM resource for interference measurement
- NZP CSI-RS resource for interference measurement
- NZP CSI-RS resource for channel measurement

With regard to CSI-RS resource sets associated with a resource configuration in which the higher-layer parameter of resource Type is configured to be "aperiodic", "periodic", or "semi-persistent", a trigger state of CSI report configuration having reportType configured to be "aperiodic", and a resource configuration for channel or interference measurement on one or multiple component cells (CCs) may be configured via the higher-layer parameter of CSI-AperiodicTriggerStateList.

Aperiodic CSI reporting of the UE may be performed using a PUSCH, periodic CSI reporting may be performed using a PUCCH, and semi-persistent CSI reporting may be performed using a PUSCH when triggered or activated via DCI, and may be performed using a PUCCH after activated via a MAC control element (MAC CE). As described above, CSI resource configurations may also be configured to be aperiodic, periodic, or semi-persistent. Combinations of CSI reporting configurations and CSI resource configurations may be supported based on Table 8 below.

[Table 8]

| CSI-RS Configuration | Periodic CSI Reporting | Semi-Persistent CSI Reporting | Aperiodic CSI Reporting |
|---|---|---|---|
| Periodic CSI-RS | No dynamic triggering/activation | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Semi-Persistent CSI-RS | Not Supported | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Aperiodic CSI-RS | Not Supported | Not Supported | Triggered by DCI; additionally, activation command [10, TS 38.321] possible as defined in Subclause 5.2.1.5.1. |

Aperiodic CSI reporting may be triggered by a "CSI request" field in DCI format 0_1 corresponding to scheduling DCI for a PUSCH. The UE may monitor a PDCCH, may acquire DCI format 0_1, and may acquire scheduling information of a PUSCH and a CSI request indicator. The CSI request indicator may be configured to have NTS (=0, 1, 2, 3, 4, 5, or 6) bits, and may be determined by higher-layer signaling (reportTriggerSize). One trigger state among one or multiple aperiodic CSI report trigger states which may be configured via higher-layer signaling (CSI-AperiodicTriggerStateList) may be triggered by the CSI request indicator.

- If all bits in the CSI request field are 0, this may indicate that CSI reporting is not requested.
- If the number M of configured CSI trigger states in CSI-AperiodicTriggerStateLite is greater than 2NTs-1, M CSI trigger states may be mapped to 2NTs-1 trigger states according to a predefined mapping relation, and one trigger state among the 2NTs-1 trigger states may be indicated by the CSI request field.

- If the number M of configured CSI trigger states in CSI-AperiodicTriggerStateLite is less than or equal to 2NTs-1, one of the M CSI trigger states may be indicated by the CSI request field.

Table 9 below shows an example of the relationship between a CSI request indicator and a CSI trigger state that may be indicated by a corresponding indicator.

[Table 9]

| CSI request field | CSI trigger state | CSI-ReportConfigId | CSI-ResourceConfigId |
|---|---|---|---|
| 00 | no CSI request | N/A | N/A |
| 01 | CSI trigger state#1 | CSI report#1 | CSI resource#1, |
| | | CSI report#2 | CSI resource#2 |
| 10 | CSI trigger state#2 | CSI report#3 | CSI resource#3 |
| 11 | CSI trigger state#3 | CSI report#4 | CSI resource#4 |

The UE may measure a CSI resource in a CSI trigger state triggered via the CSI request field, and then generate CSI (including, for example, at least one of the CQI, PMI, CRI, SSBRI, LI, RI, or L1-RSRP described above) based on the measurement. The UE may transmit the acquired CSI by using the PUSCH scheduled via corresponding DCI format 0_1. If one bit corresponding to an uplink data indicator (UL-SCH indicator) in DCI format 0_1 indicates "1", the UE may multiplex uplink data (UL-SCH) and the acquired CSI on the PUSCH resource scheduled by DCI format 0_1 so as to transmit the same. If one bit corresponding to the uplink data indicator (UL-SCH indicator) in DCI format 0_1 indicates "0", the UE may map only CSI, without uplink data (UL-SCH), to the PUSCH resource scheduled by DCI format 0_1 so as to transmit the same.

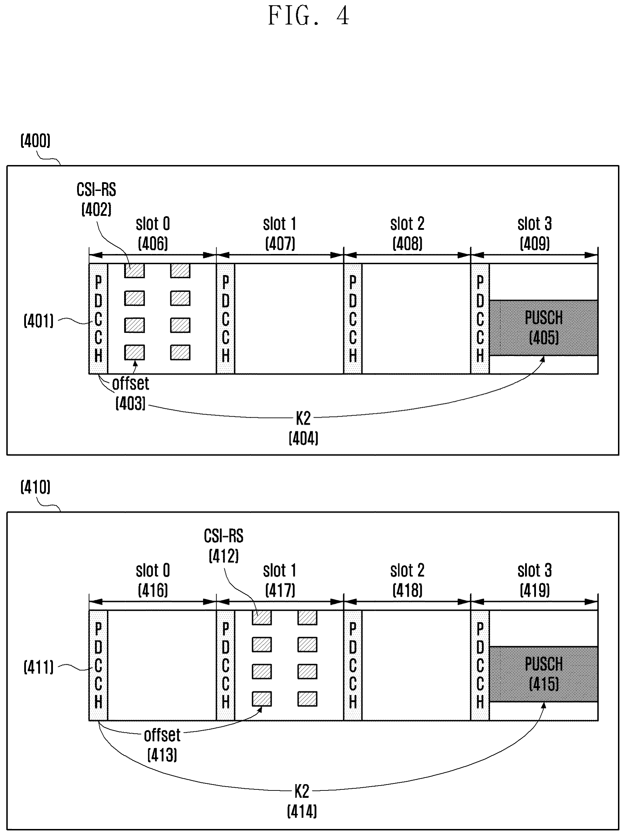

FIG. 4 illustrates an example of an aperiodic CSI reporting method.

In an example 400 of FIG. 4, the UE may acquire DCI format 0_1 by monitoring a PDCCH 401, and may acquire scheduling information and CSI request information for a PUSCH 405 therefrom. The UE may acquire resource information of a CSI-RS 402 to be measured, from a received CSI request indicator. The UE may determine a time point at which the UE needs to measure a resource of the CSI-RS 402, based on a time point at which DCI format 0_1 is received, and a parameter for an offset (e.g., aforementioned aperiodicTriggeringOffset) in a CSI resource set configuration (e.g., an NZP CSI-RS resource set configuration (NZP-CSI-RS-ResourceSet)). More specifically, the UE may be configured with an offset value X of the parameter, aperiodicTriggeringOffset, in the NZP-CSI-RS resource set configuration from a base station via higher-layer signaling, and the configured offset value X may refer to an offset between a slot in which DCI triggering aperiodic CSI reporting is received, and a slot in which the CSI-RS resource is transmitted. For example, aperiodicTriggeringOffset parameter values and offset values X may have mapping relationships as shown in Table 10 below.

[Table 10]

| aperiodicTriggeringOffset | Offset X |
|---|---|
| 0 | 0 slot |
| 1 | 1 slot |
| 2 | 2 slots |
| 3 | 3 slots |
| 4 | 4 slots |
| 5 | 16 slots |
| 6 | 24 slots |

The example 400 of FIG. 4 shows an example in which aforementioned offset value X is configured to be 0 (X=0). In this case, the UE may receive the CSI-RS 402 in a slot (corresponding to slot 0 406 of FIG. 4) in which DCI format 0_1 triggering aperiodic CSI reporting is received, and may report CSI information, which is measured based on the received CSI-RS, to the base station via the PUSCH 405. The UE may acquire, from DCI format 0_1, scheduling information (information corresponding to each field of DCI format 0_1 described above) on the PUSCH 405 for CSI reporting. For example, in DCI format 0_1, the UE may acquire information on a slot in which the PUSCH 405 is to be transmitted, from time domain resource allocation information for the PUSCH 405 described above. The UE acquires 3 as a K2 value corresponding to a slot offset value for PDCCH-to-PUSCH, and accordingly, the PUSCH 405 may be transmitted in slot 3 409, which is spaced 3 slots apart from slot 0 406, i.e., a time point at which the PDCCH 401 has been received.

In another example 410 of FIG. 4, the UE may acquire DCI format 0_1 by monitoring a PDCCH 411, and may acquire scheduling information and CSI request information for a PUSCH 415 therefrom. The UE may acquire resource information of a CSI-RS 412 to be measured, from a received CSI request indicator. The example 410 shows an example in which the offset value X for CSI-RS described above is configured to be 1 (X=1). In this case, the UE may receive the CSI-RS 412 in a slot (corresponding to slot 0 416 of FIG. 4) in which DCI format 0_1 triggering aperiodic CSI reporting is received, and may report CSI information, which is measured based on the received CSI-RS, to the base station via the PUSCH 415.

The aperiodic CSI report may include at least one of or both CSI part 1 and CSI part 2, and if the aperiodic CSI report is transmitted via the PUSCH, the aperiodic CSI report may be multiplexed on a transport block. After a CRC is inserted into an input bit of aperiodic CSI for multiplexing, encoding and rate matching may be performed, and then transmission may be performed by mapping to resource elements within the PUSCH in a specific pattern. The CRC insertion may be omitted depending on a coding method or a length of the input bit. The number of modulation symbols, which is calculated for rate matching during multiplexing of CSI part 1 or CSI part 2 included in the aperiodic CSI report, may be calculated as given below.

---

For CSI part 1 transmission on PUSCH not using repetition type B with UL-SCH, the number of coded modulation symbols per layer for CSI part 1 transmission, denoted as $Q'_{CSI-part1}$, is determined as follows:

$$Q'_{CSI-1} = \min\left\{ \frac{(O_{CSI-1}+L_{CSI-1})\cdot\beta_{offset}^{PUSCH}\cdot\sum_{l=0}^{N_{symb,all}^{PUSCH}-1} M_{sc}^{UCI}(l)}{\sum_{r=0}^{C_{UL-SCH}-1} K_r} , \left\lceil \alpha\cdot\sum_{l=0}^{N_{symb,all}^{PUSCH}-1} M_{sc}^{UCI}(l) \right\rceil - Q'_{ACK/CG-UCI} \right\}$$

...

For CSI part 1 transmission on an actual repetition of a PUSCH with repetition Type B with UL-SCH, the number of coded modulation symbols per layer for CSI part 1 transmission, denoted as $Q'_{CSI-part1}$, is determined as follows:

$$Q'_{CSI-1} = \min\left\{ \frac{(O_{CSI-1}+L_{CSI-1})\cdot\beta_{offset}^{PUSCH}\cdot\sum_{l=0}^{N_{symb,nominal}^{PUSCH}-1} M_{sc,nominal}^{UCI}(l)}{\sum_{r=0}^{C_{UL-SCH}-1} K_r} , \quad \alpha\cdot\sum_{l=0}^{N_{symb,nominal}^{PUSCH}-1} M_{sc,nominal}^{UCI}(l) \right.$$
$$\left. - Q'_{ACK/CG-UCI} , \quad \sum_{l=0}^{N_{symb,actual}^{PUSCH}-1} M_{sc,actual}^{UCI}(l) - Q'_{ACK/CG-UCI} \right\}$$

...

For CSI part 1 transmission on PUSCH without UL-SCH, the number of coded modulation symbols per layer for CSI part 1 transmission, denoted as $Q'_{CSI-part1}$ , is determined as follows:

if there is CSI part 2 to be transmitted on the PUSCH,

$$Q'_{CSI-1} = \min\left\{ \left\lceil \frac{(O_{CSI-1}+L_{CSI-1})\cdot\beta_{offset}^{PUSCH}}{R\cdot Q_m} \right\rceil, \sum_{l=0}^{N_{symb,all}^{PUSCH}-1} M_{sc}^{UCI}(l) - Q'_{ACK} \right\}$$

else

$$Q'_{CSI-1} = \sum_{l=0}^{N_{symb,all}^{PUSCH}-1} M_{sc}^{UCI}(l) - Q'_{ACK}$$

end if

...

For CSI part 2 transmission on PUSCH not using repetition type B with UL-SCH, the number of coded modulation symbols per layer for CSI part 2 transmission, denoted as $Q'_{CSI-part2}$, is determined as follows:

$$Q'_{CSI-2} = \min\left\{ \frac{(O_{CSI-2}+L_{CSI-2})\cdot\beta_{offset}^{PUSCH}\cdot\sum_{l=0}^{N_{symb,all}^{PUSCH}-1} M_{sc}^{UCI}(l)}{\sum_{r=0}^{C_{UL-SCH}-1} K_r} , \left\lceil \alpha\cdot\sum_{l=0}^{N_{symb,all}^{PUSCH}-1} M_{sc}^{UCI}(l) \right\rceil - Q'_{ACK/CG-UCI} - Q'_{CSI-1} \right\}$$

For CSI part 2 transmission on an actual repetition of a PUSCH with repetition Type B with UL-SCH, the number of coded modulation symbols per layer for CSI part 2 transmission, denoted as $Q'_{CSI-part2}$, is determined as follows:

---

(continued)

$$Q'_{\text{CSI-2}} = \min \left\{ \frac{(O_{\text{CSI-2}} + L_{\text{CSI-2}}) \cdot \beta^{\text{PUSCH}}_{\text{offset}} \cdot \sum_{l=0}^{N^{\text{PUSCH}}_{\text{symb,nominal}}-1} M^{\text{UCI}}_{\text{sc,nominal}}(l)}{\sum_{r=0}^{C_{\text{UL-SCH}}-1} K_r} , \quad \alpha \cdot \sum_{l=0}^{N^{\text{PUSCH}}_{\text{symb,nominal}}-1} M^{\text{UCI}}_{\text{sc,nominal}}(l) \right.$$

$$\left. - Q'_{\text{ACK/CG-UCI}} - Q'_{\text{CSI-1}} , \quad \sum_{l=0}^{N^{\text{PUSCH}}_{\text{symb,actual}}-1} M^{\text{UCI}}_{\text{sc,actual}}(l) - Q'_{\text{ACK/CG-UCI}} - Q'_{\text{CSI-1}} \right\}$$

...

For CSI part 2 transmission on PUSCH without UL-SCH, the number of coded modulation symbols per layer for CSI part 2 transmission, denoted as $Q'_{\text{CSI-part2}}$, is determined as follows:

$$Q'_{\text{CSI-2}} = \sum_{l=0}^{N^{\text{PUSCH}}_{\text{symb,all}}-1} M^{\text{UCI}}_{\text{sc}}(l) - Q'_{\text{ACK}} - Q'_{\text{CSI-1}}$$

Specifically, for PUSCH repetition type A and B transmissions, the UE may multiplex the aperiodic CSI report only on the first repetition transmission among repetition PUSCH transmissions, so as to transmit the same. This is because aperiodic CSI report information to be multiplexed is encoded in a polar code scheme, and in this case, each PUSCH repetition needs to have the same frequency and time resource allocation in order to multiplex the aperiodic CSI report information on multiple PUSCH repetitions. Particularly, in the case of PUSCH repetition type B transmission, since each actual repetition may have different OFDM symbol durations, the aperiodic CSI report may be multiplexed only on the first repetition and then transmitted.

In addition, for PUSCH repetition type B transmission, when the UE receives DCI for activation of semi-persistent CSI reporting or scheduling of aperiodic CSI reporting without scheduling for a transport block, the UE may assume that a value of nominal repetition is 1 even if the number of PUSCH repetition transmissions, which is configured via higher-layer signaling, is greater than 1. In addition, if the aperiodic or semi-persistent CSI reporting is scheduled or activated without scheduling for a transport block, based on PUSCH repetition type B transmission, the UE may expect that a first nominal repetition is identical to the first actual repetition. With regard to the PUSCH transmitted while including semi-persistent CSI, based on PUSCH repetition type B transmission, without scheduling for DCI after the semi-persistent CSI reporting has been activated via the DCI, if the first nominal repetition is different from the first actual repetition, transmission for the first nominal repetition may be ignored.

When the base station indicates aperiodic CSI reporting or semi-persistent CSI reporting to the UE through DCI, the UE may discriminate whether the UE is able to perform valid channel reporting through the indicated CSI reporting, by considering a channel computation time (CSI computation time) required for the CSI reporting. With respect to aperiodic CSI reporting or semi-persistent CSI reporting indicated through DCI, the UE may perform valid CSI reporting starting from an uplink symbol after Z symbols after the end of the last symbol included in a PDCCH including the DCI indicating the CSI reporting, and the Z symbols may vary according to a numerology of a downlink bandwidth part corresponding to a PDCCH including DCI indicating the CSI reporting, a numerology of an uplink bandwidth part corresponding to a PUSCH transmitting the CSI report, and a type or a characteristic (report quantity, frequency band granularity, the number of ports of a reference signal, a codebook type, etc.) of CSI reported in the CSI report. In other words, in order to determine CSI reporting as valid CSI reporting, uplink transmission of the CSI reporting needs to be performed after a $Z_{\text{ref}}$ symbol with a timing advance (TA). The $Z_{\text{ref}}$ symbol is an uplink symbol on which a cyclic prefix (CP) is started after the time $T_{\text{proc,CSI}} = (Z)(2048 + 144) \cdot \kappa 2^{-\mu} \cdot T_c$ from the moment at which the last symbol of the triggering PDCCH is ended. Here, a detailed value of Z follows the following description, and $T_c = 1/(\Delta f_{max} \cdot N_f)$, $\Delta f_{max} = 480 \cdot 10^3 Hz$, $N_f = 4096$, $\kappa = 64$, and $\mu$ is numerology. $\mu$ may be promised such that one of ($\mu_{\text{PDCCH}}$, $\mu_{\text{CSI-RS}}$, $\mu_{\text{UL}}$) causing the greatest $T_{\text{proc,CSI}}$ value is used. $\mu_{\text{PDCCH}}$ may be referred to as a subcarrier spacing used for PDCCH transmission, $\mu_{\text{CSI-RS}}$ may be referred to as a subcarrier spacing used for CSI-RS transmission, and $\mu_{\text{UL}}$ may be referred to as a subcarrier spacing of an uplink channel used for uplink control information (UCI) transmission for CSI reporting. As another example, $\mu$ may be promised such that one of ($\mu_{\text{PDCCH}}$, $\mu_{\text{UL}}$) causing the greatest $T_{\text{proc,CSI}}$ value is used. The definitions of $\mu_{\text{PDCCH}}$ and $\mu_{\text{UL}}$ refer to the above description. Hereinafter, for convenience of explanation, satisfying the above condition is called satisfying CSI reporting validity condition 1.

In addition, if a reference signal for channel measurement for aperiodic CSI reporting indicated to the UE through DCI is an aperiodic reference signal, the UE may perform valid CSI reporting starting from an uplink symbol after Z' symbols after the end of the last symbol including the reference signal. The Z' symbols described above may vary according to a numerology of a downlink bandwidth part corresponding to a PDCCH including the DCI indicating the CSI reporting, a numerology of a bandwidth corresponding to a reference signal for channel measurement for the CSI reporting, a numerology of an uplink bandwidth part corresponding to a PUSCH transmitting the CSI report, and a type or a characteristic (reportquantity, frequency band granularity, the number of ports of a reference signal, a codebook type, etc.) of CSI reported in the CSI report. In other words, in order to determine CSI reporting as valid CSI reporting, uplink transmission of the CSI reporting needs to be performed after a $Z_{ref}$ symbol with a TA. The $Z_{ref}$ symbol is an uplink symbol on which a CP is started after the time $T'_{proc,CSI} = (Z')(2048 + 144) \cdot \kappa 2^{-\mu} \cdot T_c$ from the moment at which the last symbol of an aperiodic CSI-RS or aperiodic CSI-IM triggered by the triggering PDCCH is ended. Here, a detailed value of $Z'$ follows the following description, and $T_c = 1/(\Delta f_{max} \cdot N_f)$, $\Delta f_{max} = 480 \cdot 10^3 Hz$, $N_f$=4096, $\kappa$=64, and $\mu$ is numerology. $\mu$ may be promised such that one of ($\mu_{PDCCH}$, $\mu_{CSI-RS}$, $\mu_{UL}$) causing the greatest $T_{proc,CSI}$ value is used. $\mu_{PDCCH}$ may be referred to as a subcarrier spacing used for triggering PDCCH transmission, $\mu_{CSI-RS}$ may be referred to as a subcarrier spacing used for CSI-RS transmission, and $\mu_{UL}$ may be referred to as a subcarrier spacing of an uplink channel used for UCI transmission for CSI reporting. As another example, $\mu$ may be promised such that one of ($\mu_{PDCCH}$, $\mu_{UL}$) causing the greatest $T_{proc,CSI}$ value is used. In this case, the definitions of $\mu_{PDCCH}$ and $\mu_{UL}$ refer to the above description. Hereinafter, for convenience of explanation, satisfying the above condition is called satisfying CSI reporting validity condition 2.

If the base station indicates aperiodic CSI reporting for an aperiodic reference signal to the UE through DCI, the UE may perform valid CSI reporting starting from a first uplink symbol satisfying both a time point after Z symbols after the end of the last symbol included in a PDCCH including the DCI indicating the CSI reporting and a time point after Z' symbols after the end of the last symbol including the reference signal. That is, aperiodic CSI reporting based on an aperiodic reference signal is determined as valid CSI reporting only if the reporting satisfies both CSI reporting validity conditions 1 and 2.

If a CSI reporting time point indicated by the base station fails to satisfy a CSI computation time requirement, the UE may determine that the CSI reporting is not valid and may not consider a CSI state update for the CSI report.

The Z and Z' symbols for calculating a CSI computation time described above follow Table 11 and Table 12 below. For example, if CSI reported in a CSI report includes only wideband information, the number of ports of a reference signal is equal to or smaller than 4, there is one reference signal resource, and a codebook type is "typeI-SinglePanel" or a type (reportquantity) of the reported CSI is "cri-RI-CQI," the Z and Z' symbols follow $Z_1$ and $Z_1'$ values in Table 12. Hereinafter, this is called delay requirement 2. Furthermore, if a PUSCH including the CSI report does not include a transmission block or a hybrid automatic repeat request acknowledgement (HARQ-ACK), and a CSI processing unit (CPU) occupation of the UE is 0, the Z and Z' symbols follow $Z_1$ and $Z_1'$ values in Table 11 and this is called delay requirement 1. A description for the CPU occupation is given below in detail. In addition, if reportquantity is "cri-RSRP" or "ssb-Index-RSRP," the Z and Z' symbols follow $Z_3$ and $Z_3'$ values in Table 12. $X_1$, $X_2$, $X_3$, and $X_4$ in Table 12 indicates a UE capability for a beam reporting time, and $KB_1$ and $KB_2$ in [Table 12] indicate a UE capability for a beam change time. If CSI does not correspond to the type or characteristic of CSI reported in a CSI report described above, the Z and Z' symbols follow $Z_2$ and $Z_2'$ values in Table 12.

[Table 11]

| $\mu$ | $Z_1$ [symbols] | |
|---|---|---|
| | $Z_1$ | $Z'_1$ |
| 0 | 10 | 8 |
| 1 | 13 | 11 |
| 2 | 25 | 21 |
| 3 | 43 | 36 |

[Table 12]

| $\mu$ | $Z_1$ [symbols] | | $Z_2$ [symbols] | | $Z_3$ [symbols] | |
|---|---|---|---|---|---|---|
| | $Z_1$ | $Z'_1$ | $Z_2$ | $Z'_2$ | $Z_3$ | $Z'_3$ |
| 0 | 22 | 16 | 40 | 37 | 22 | $X_1$ |
| 1 | 33 | 30 | 72 | 69 | 33 | $X_2$ |
| 2 | 44 | 42 | 141 | 140 | min(44, X3+KB$_1$) | $X_3$ |
| 3 | 97 | 85 | 152 | 140 | min(97, X4+KB$_2$) | $X_4$ |

When the base station indicates aperiodic/semi-persistent/periodic CSI reporting to the UE, the base station may configure a CSI reference resource to determine a reference time and frequency for a channel to be reported in a CSI report. The frequency of the CSI reference resource may be information on a carrier and a subband in which CSI is to be measured, which is indicated in a CSI report configuration, and the respective information may correspond to carrier and reportFreqConfiguration in the higher layer signaling CSI-ReportConfig. The time of the CSI reference resource may be defined based on a time at which a CSI report is transmitted. For example, if CSI report #X is indicated to be transmitted in uplink slot n' of a carrier and a BWP in which a CSI report is to be transmitted, the time of the CSI reference resource of CSI report #X may be defined to be downlink slot n-$n_{CSI-ref}$ of a carrier and a BWP in which CSI is measured. Downlink slot n is calculated as $n = \lfloor n' \cdot 2^{\mu_{DL}} / 2^{\mu_{UL}} \rfloor$ when the numerology of a carrier and a BWP in which CSI is measured is named $\mu_{DL}$ and the numerology of a carrier and a BWP in which CSI report #X is transmitted is named $\mu_{UL}$. $n_{CSI-ref}$, which is a slot interval between downlink slot n and a CSI reference signal, is based on the number of CSI-RS/SSB resources for channel measurement when CSI report #X transmitted in uplink slot n' is a semi-persistent or periodic CSI report, follows $n_{CSI-ref} = 4 \cdot 2^{\mu_{DL}}$ if a single CSI-RS/SSB resource is associated with the CSI report, and follows $n_{CSI-ref} = 5 \cdot 2^{\mu_{DL}}$ if multiple CSI-RS/SSB resources are associated with the CSI report. If CSI report #X transmitted in uplink slot n' is an aperiodic CSI report, $n_{CSI-ref}$ may be calculated as $n_{CSI-ref} = \lfloor Z'/N_{symb}^{slot} \rfloor$ in consideration of CSI computation time Z' for channel measurement. $N_{symb}^{slot}$ described above is the number of symbols included in one slot, and is assumed as 14 in NR.

In a case where the base station indicates, through higher layer signaling or DCI, the UE to transmit a CSI report in uplink slot n', the UE may report CSI by performing channel measurement or interference measurement for a CSI-RS resource, a CSI-IM resource, or an SSB resource, among CSI-RS resources, CSI-IM resources, or SSB resources associated with the CSI report, which has been transmitted before and in a CSI reference resource slot of the CSI report transmitted in uplink slot n'. The CSI-RS resource, CSI-IM resource, or SSB resource associated with the CSI report may indicate a CSI-RS resource, a CSI-IM resource, or an SSB resource included in a resource set configured in a resource configuration referenced by a report configuration for the CSI report of the UE configured through higher layer signaling, or may indicate a CSI-RS resource, a CSI-IM resource, or an SSB resource referenced by a CSI report trigger state including a parameter for the CSI report, or a CSI-RS resource, a CSI-IM resource, or an SSB resource indicated by an ID of a reference signal (RS) set.

In embodiments of the disclosure, a CSI-RS/CSI-IM/SSB occasion may denote a transmission time point of a CSI-RS/CSI-IM/SSB resource(s) determined by a higher layer configuration or a combination of a higher layer configuration and DCI triggering. For example, a slot in which a semi-persistent or periodic CSI-RS resource is transmitted is determined according to a slot period and a slot offset configured through higher layer signaling, and a transmission symbol(s) in the slot is determined according to resource mapping information (resourceMapping). As another example, a slot in which an aperiodic CSI-RS resource is transmitted is determined according to a slot offset from a PDCCH including DCI indicating channel reporting configured through higher layer signaling, and a transmission symbol(s) in the slot is determined according to resource mapping information (resourceMapping).

A CSI-RS occasion described above may be determined by independently considering a transmission time point of each CSI-RS resource or collectively considering transmission time points of one or more CSI-RS resource(s) included in a resource set, and therefore, the following two interpretations for a CSI-RS occasion according to each resource set configuration are possible.

- Interpretation 1-1: From the start time point of an earliest symbol to the end time point of a latest symbol, one particular resource being transmitted over the earliest and latest symbols among one or more CSI-RS resources included in a resource set(s) configured in a resource configuration referenced by a report configuration configured for a CSI report.
- Interpretation 1-2: From the start time point of the earliest symbol on which the earliest CSI-RS resource is transmitted among all CSI-RS resources included in a resource set(s) configured in a resource configuration referenced by a report configuration configured for a CSI report, to the end time point of the latest symbol on which the latest CSI-RS resource is transmitted.

Hereinafter, both of the two interpretations for a CSI-RS occasion may be considered and individually applicable in embodiments of the disclosure. It is also possible to consider both of the two interpretations for a CSI-IM occasion and an SSB occasion as in the case of a CSI-RS occasion. However, the principle is similar to the above description, and thus the redundant description will be omitted hereinafter.

In embodiments of the disclosure, "a CSI-RS/CSI-IM/SSB occasion for CSI report #X transmitted in uplink slot n'" indicates a set of CSI-RS occasions, CSI-IM occasions, or SSB occasions before and in a CSI reference resource of CSI report #X transmitted in uplink slot n' among CSI-RS occasions, CSI-IM occasions, and SSB occasions of CSI-RS resources, CSI-IM resources, and SSB resources included in a resource set configured in a resource configuration referenced by a report configuration configured for CSI report #X.

In embodiments of the disclosure, the following two interpretations for "the latest CSI-RS/CSI-IM/SSB occasion among CSI-RS/CSI-IM/SSB occasions for CSI report #X transmitted in uplink slot n'" are possible.

- Interpretation 2-1: A set of occasions including the latest CSI-RS occasion among CSI-RS occasions for CSI report #X transmitted in uplink slot n', the latest CSI-IM occasion among CSI-IM occasions for CSI report #X transmitted in uplink slot n', and the latest SSB occasion among SSB occasions for CSI report #X transmitted in uplink slot n'
- Interpretation 2-2: The latest occasion among all CSI-RS occasions, CSI-IM occasions, and SSB occasions for CSI report #X transmitted in uplink slot n'

Hereinafter, in embodiments of the disclosure, the two interpretations for "the latest CSI-RS/CSI-IM/SSB occasion among CSI-RS/CSI-IM/SSB occasions for CSI report #X transmitted in uplink slot n'" may both be considered and individually applicable. In addition, in consideration of the above two interpretations (interpretation 1-1 and interpretation 1-2) for CSI-RS occasions, CSI-IM occasions, and SSB occasions, four different interpretations (application of interpretation 1-1 and interpretation 2-1, application of interpretation 1-1 and interpretation 2-2, application of interpretation 1-2 and interpretation 2-1, and application of interpretation 1-2 and interpretation 2-2) may all be considered and individually applicable with respect to "the latest CSI-RS/CSI-IM/SSB occasion among CSI-RS/CSI-IM/SSB occasions for CSI report #X transmitted in uplink slot n'" in embodiments of the disclosure.

The base station may indicate CSI reporting by considering the amount of CSI simultaneously computable by the UE for the CSI reporting, that is, the number of CSI processing units (CPUs) of the UE. If the number of CSI processing units simultaneously computable by the UE is $N_{CPU}$, the UE may not expect a CSI reporting indication from the base station, which requires CSI computation larger than $N_{CPU}$, or may not consider update of channel information requiring CSI computation larger than $N_{CPU}$. $N_{CPU}$ may be reported by the UE to the base station through higher layer signaling or may be configured by the base station through higher layer signaling.

It is assumed that CSI reporting indicated by the base station to the UE occupies some or all of CPUs for CSI computation among $N_{CPU}$ CPUs corresponding to the total number of CSIs simultaneously computable by the UE. If with respect to each CSI report, for example, the number of CSI processing units required for CSI report n (n=0, 1, ..., and N-1) is $O_{CPU}^{(n)}$, the number of CSI processing units required for a total of N CSI reports may be $\sum_{n=0}^{N-1} O_{CPU}^{(n)}$. CSI processing units required for each reportQuantity configured in a CSI report may be configured as the following.

- $O_{CPU}^{(n)} = 0$ : A case where reportQuantity configured in a CSI report is configured as "none," and trs-Info is configured in a CSI-RS resource set associated with the CSI report

- $O_{CPU}^{(n)} = 1$ : A case where reportQuantity configured in a CSI report is configured as "none," "cri-RSRP," or "ssb-Index-RSRP," and trs-Info is not configured in a CSI-RS resource set associated with the CSI report

- A case where reportQuantity configured in a CSI report is configured as "cri-RI-PMI-CQI" , "cri-RI-i1," "cri-RI-i1-CQI," "cri-RI-CQI," or "cri-RI-LI-PMI-CQI"

>> $O_{CPU}^{(n)} = N_{CPU}$ : A case where an aperiodic CSI report is triggered and is not multiplexed with one of a TB/HARQ-ACK or both. A case where the CSI report includes wideband CSI, corresponds to a maximum of four CSI-RS ports, and corresponds to a single resource having no CRI report, and codebookType corresponds to "type1-SinglePanel" or reportQuantity corresponds to "cri-RI-CQI"
(The case correspond to the above delay requirement 1, and may correspond to a case where the UE quickly computes CSI by using all available CPUs and reports same)

>> $O_{CPU}^{(n)} = K_s$ : All the remaining cases other than the above case. $K_s$ indicates the number of CSI-RS resources in a CSI-RS resource set for channel measurement.

When the number of CSI computations required by the UE for multiple CSI reports at a particular time point is greater than $N_{CPU}$ that is the number of CSI processing units simultaneously computable by the UE, the UE may not consider a CSI update for some CSI reports. A CSI report, among multiple indicated CSI reports, for which a CSI update is not considered is determined by considering at least a priority of reported CSI and a time for which CSI computation required for the CSI report occupies CPUs. For example, a CSI update for a CSI report, the required CSI computation of which starts to occupy CPUs at the latest time point, may not be considered, and it is possible not to preferentially consider a CSI update for a CSI report having a low CSI priority.

A CSI priority may be determined by referring to the following.

CSI priority value $Pri_{iCSI}$ $(y, k, c, s) = 2 \cdot N_{cells} \cdot M_s \cdot Y + N_{cells} \cdot M_s \cdot k + M_s \cdot c + s$

- y=0, in a case of an aperiodic CSI report transmitted through a PUSCH, y=1, in a case of a semi-persistent CSI report transmitted through a PUSCH, y=2, in a case of a semi-persistent CSI report transmitted through a PUCCH, and y=3, in a case of a periodic CSI report transmitted through a PUCCH;
- k=0, when a CSI report includes L1-RSRP, and k=1, when a CSI report does not include L1-RSRP;
- c: A serving cell index, and $N_{cells}$: A maximum number (maxNrofServingCells) of serving cells configured through higher layer signaling; and
- s: A CSI report configuration index (reportConfigID), and $M_s$: A maximum number (maxNrofCSI-ReportConfigurations)of CSI report configurations configured through higher layer signaling.

A CSI priority for a CSI report is determined through the priority value $Pri_{iCSI}(y,k,c,s)$ described above. The CSI priority value is determined through a type of CSI included in a CSI report, a time axis reporting characteristic (aperiodic, semi-persistent, or periodic) of the CSI report, a channel (PUSCH or PUCCH) through which the CSI report is transmitted, a serving cell index, or a CSI report configuration index. A CSI priority for a CSI report is determined to be high when having a smaller priority value through a comparison of the priority value of $Pri_{iCSI}(y,k,c,s)$.

When a time for which CSI computation required for CSI reporting indicated by the base station to the UE occupies CPUs is a CPU occupation time, the CPU occupation time is determined considering a type (reportquantity) of CSI included in the CSI report, a time axis characteristic (aperiodic, semi-persistent, or periodic) of the CSI report, a slot or symbol occupied by higher layer signaling or DCI indicating the CSI reporting, or some or all of symbols or slots occupied by a reference signal for channel state measurement.

Next, downlink control information (DCI) in a 5G communication system will be described in detail.

In a 5G system, scheduling information regarding uplink data (or physical uplink shared channel (PUSCH)) or downlink data (or physical downlink shared channel (PDSCH)) is transferred from a base station to a UE through DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH). A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 13 below, for example.

[Table 13]

- Identifier for DCI formats - [1] bit
- Frequency domain resource assignment -

$$[\lceil \log_2 (N_{RB}^{UL, BWP} (N_{RB}^{UL, BWP} + 1)/2) \rceil] \text{ bits}$$

- Time domain resource assignment - X bits
- Frequency hopping flag - 1 bit.
- Modulation and coding scheme - 5 bits
- New data indicator - 1 bit
- Redundancy version - 2 bits
- HARQ process number - 4 bits
- Transmit power control (TPC) command for scheduled PUSCH - [2] bits

(continued)

| - Uplink/ supplementary uplink (UL/SUL) indicator - 0 or 1 bit |

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 14 below, for example.

[Table 14]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

    o For resource allocation type 0, $\left\lceil N_{RB}^{UL,BWP}/P \right\rceil$ bits

    o For resource allocation type 1, $\left\lceil \log_2(N_{RB}^{UL,BWP}(N_{RB}^{UL,BWP}+1)/2) \right\rceil$ bits

- Time domain resource assignment -1, 2, 3, or 4 bits
- Virtual resource block (VRB)-to-physical resource block (PRB) mapping - 0 or 1 bit, only for resource allocation type 1.

    o 0 bit if only resource allocation type 0 is configured;

    o 1 bit otherwise.

- Frequency hopping flag - 0 or 1 bit, only for resource allocation type 1.

    o 0 bit if only resource allocation type 0 is configured;

    o 1 bit otherwise.

- Modulation and coding scheme - 5 bits
- New data indicator - 1 bit
- Redundancy version - 2 bits
- HARQ process number - 4 bits
- 1st downlink assignment index- 1 or 2 bits

    o 1 bit for semi-static HARQ-ACK codebook;

    o 2 bits for dynamic HARQ-ACK codebook with single HARQ-ACK codebook.

- 2nd downlink assignment index - 0 or 2 bits

    o 2 bits for dynamic HARQ-ACK codebook with two HARQ-ACK sub-codebooks;

    o 0 bit otherwise.

- TPC command for scheduled PUSCH - 2 bits

- SRS resource indicator - $\left\lceil \log_2\left( \sum_{k=1}^{L_{max}} \binom{N_{SRS}}{k} \right) \right\rceil$ or $\left\lceil \log_2(N_{SRS}) \right\rceil$ bits

    o $\left\lceil \log_2\left( \sum_{k=1}^{L_{max}} \binom{N_{SRS}}{k} \right) \right\rceil$ bits for non-codebook based PUSCH transmission;

    o $\left\lceil \log_2(N_{SRS}) \right\rceil$ bits for codebook based PUSCH transmission.

- Precoding information and number of layers - up to 6 bits
- Antenna ports - up to 5 bits
- SRS request - 2 bits
- Channel state information (CSI) request - 0, 1, 2, 3, 4, 5, or 6 bits
- Code block group (CBG) transmission information - 0, 2, 4, 6, or 8 bits
- Phase tracking reference signal (PTRS)-demodulation reference signal (DMRS) association - 0 or 2 bits.
- beta_offset indicator - 0 or 2 bits
- DMRS sequence initialization - 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 15 below, for example.

[Table 15]

- Identifier for DCI formats - [1] bit
- Frequency domain resource assignment- $\left[ \left\lceil \log_2 (N_{RB}^{DL,BWP} (N_{RB}^{DL,BWP} + 1)/2) \right\rceil \right]$ bits
- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- Physical uplink control channel (PUCCH) resource indicator - 3 bits
- PDSCH-to-HARQ feedback timing indicator - [3] bits

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 16 below, for example.

[Table 16]

- Carrier indicator - 0 or 3 bits
- Identifier for DCI formats - [1] bits
- Bandwidth part indicator - 0, 1 or 2 bits
- Frequency domain resource assignment

        o For resource allocation type 0, $\left\lceil N_{RB}^{DL,BWP} / P \right\rceil$ bits

        o For resource allocation type 1,

        $\left\lceil \log_2 (N_{RB}^{DL,BWP} (N_{RB}^{DL,BWP} + 1)/2) \right\rceil$ bits

- Time domain resource assignment -1, 2, 3, or 4 bits
- VRB-to-PRB mapping - 0 or 1 bit, only for resource allocation type 1.
        ◦ 0 bit if only resource allocation type 0 is configured;
        o 1 bit otherwise.
- Physical resource block (PRB) bundling size indicator - 0 or 1 bit
- Rate matching indicator - 0, 1, or 2 bits
- Zero power (ZP) channel state information (CSI)-reference signal (RS) trigger - 0, 1, or 2 bits
For transport block 1:
- Modulation and coding scheme - 5 bits
- New data indicator - 1 bit
- Redundancy version - 2 bits
For transport block 2:
- Modulation and coding scheme - 5 bits
- New data indicator - 1 bit
- Redundancy version - 2 bits
- HARQ process number - 4 bits
- Downlink assignment index - 0 or 2 or 4 bits
- TPC command for scheduled PUCCH - 2 bits
- PUCCH resource indicator - 3 bits

(continued)

| |
|---|
| - PDSCH-to-HARQ_feedback timing indicator - 3 bits<br>- Antenna ports - 4, 5 or 6 bits<br>- Transmission configuration indication - 0 or 3 bits<br>- SRS request - 2 bits<br>- CBG transmission information - 0, 2, 4, 6, or 8 bits<br>- CBG flushing out information - 0 or 1 bit<br>- DMRS sequence initialization - 1 bit |

Hereinafter, a downlink control channel in a 5G system will be described in more detail with reference to the accompanying drawings.

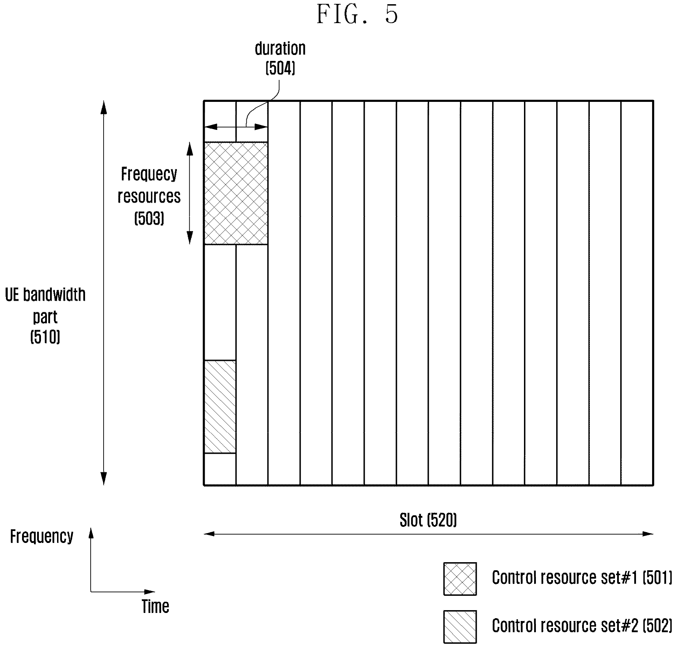

FIG. 5 illustrates an example of a control resource set (CORESET) used to transmit a downlink control channel in a 5G system.

FIG. 5 illustrates an example in which a UE bandwidth part 510 is configured along the frequency axis, and two control resource sets (control resource set #1 501 and control resource set #2 502) are configured within one slot 520 along the time axis. The control resource sets 501 and 502 may be configured in a specific frequency resource 510 within the entire UE bandwidth part 503 along the frequency domain. The control resource sets 501 and 502 may be each configured as one or multiple OFDM symbols along the time domain, and the number of the OFDM symbols may be defined as a control resource set duration 504. As an example, control resource set #1 501 is configured to have a control resource set duration corresponding to two symbols, and control resource set #2 502 is configured to have a control resource set duration corresponding to one symbol.

A control resource set in 5G described above may be configured for a UE by a base station through higher layer signaling (for example, system information, MIB, RRC signaling, etc.). The description that a control resource set is configured for a UE means that information such as a control resource set identity, the control resource set's frequency location, and the control resource set's symbol duration is provided. For example, the control resource set configuration may include the following pieces of information given in Table 18 below.

[Table 17]

| |
|---|
| ControlResourceSet ::=                              SEQUENCE {<br>       -- Corresponds to L1 parameter 'CORESET-ID' |

```
        controlResourceSetId              ControlResourceSetId,
        (control resource set identity))
        frequencyDomainResources          BIT STRING (SIZE (45)),
        (frequency domain resource assignment information)
        duration                          INTEGER
(1..maxCoReSetDuration),
        (time domain resource assignment information )
        cce-REG-MappingType                        CHOICE {
        (CCE-to-REG mapping scheme)
             interleaved                           SEQUENCE {

                  reg-BundleSize                        ENUMERATED
{n2, n3, n6},
                  (REG bundle size)

                  precoderGranularity                   ENUMERATED
{sameAsREG-bundle, allContiguousRBs},

                  interleaverSize                       ENUMERATED
{n2, n3, n6}
                  (interleaver size)

                  shiftIndex
        INTEGER(0..maxNrofPhysicalResourceBlocks-1)    OPTIONAL
                  (interleaver shift)
             },
        nonInterleaved                             NULL
        },
        tci-StatesPDCCH                    SEQUENCE(SIZE
(1..maxNrofTCI-StatesPDCCH)) OF TCI-StateId
        OPTIONAL,
        (QCL configuration information)
        tci-PresentInDCI                   ENUMERATED {enabled}
             OPTIONAL,      -- Need S
        }
```

In Table 17, tci-StatesPDCCH (simply referred to as transmission configuration indication (TCI) state) configuration information may include information of one or multiple SS/PBCH block indexes or channel state information reference signal (CSI-RS) indexes, which are quasi-co-located (QCLed) with a DMRS transmitted in a corresponding control resource set.

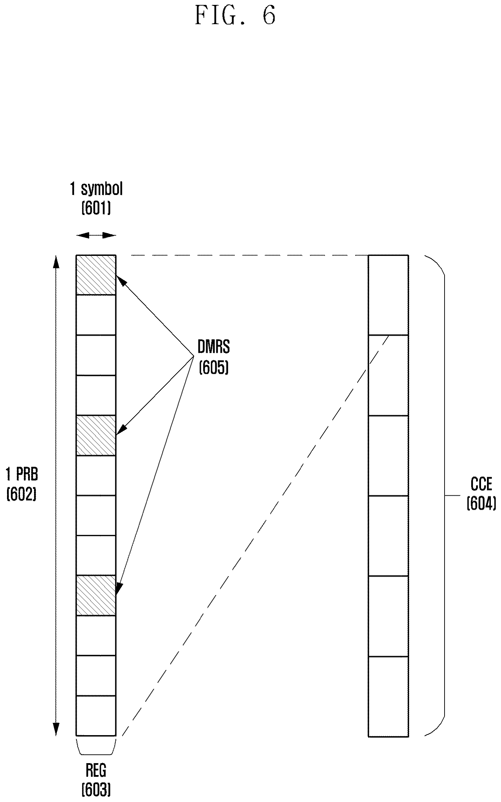

FIG. 6 illustrates an example of a basic unit of time and frequency resources constituting a downlink control channel available in a 5G system. According to FIG. 6, the basic unit of time and frequency resources constituting a control channel may be referred to as a resource element group (REG) 603, and the REG 603 may be defined by one OFDM symbol 601 along the time axis and one physical resource block (PRB) 602, that is, 12 subcarriers, along the frequency axis. The base station may configure a downlink control channel allocation unit by concatenating the REGs 603.

Provided that the basic unit of downlink control channel allocation is a control channel element 604 as illustrated in FIG. 6, one CCE 604 may include multiple REGs 603. To describe the REG 603 illustrated in FIG. 6, for example, the REG 603 may include 12 REs, and if one CCE 604 includes six REGs 603, one CCE 604 may then include 72 REs. A downlink control resource set, once configured, may include multiple CCEs 604, and a specific downlink control channel may be mapped to one or multiple CCEs 604 and then transmitted according to the aggregation level (AL) in the control resource set. The CCEs 604 in the control resource set are distinguished by numbers, and the numbers of CCEs 604 may be allocated according to a logical mapping scheme.

The basic unit of the downlink control channel, that is, the REG 603, may include both REs to which DCI is mapped, and an area to which a reference signal (DMRS 605) for decoding the same is mapped. As in FIG. 6, three DRMSs 605 may be transmitted inside one REG 603. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In a 5G system, parameters for a search space regarding a PDCCH may be configured for the UE by the base station through upper layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, this information may include the following pieces of information given in Table 18 below.

[Table 18]

```
SearchSpace ::=                              SEQUENCE {
    -- Identity of the search space. SearchSpaceId = 0 identifies the SearchSpace
configured via PBCH (MIB) or ServingCellConfigCommon.
    searchSpaceId                            SearchSpaceId,
    (search space identity)
    controlResourceSetId                     ControlResourceSetId,
    (control resource set identity)
    monitoringSlotPeriodicityAndOffset       CHOICE {
    (monitoring slot level periodicity)
        sl1                                      NULL,
        sl2                                      INTEGER (0..1),
        sl4                                      INTEGER (0..3),
        sl5                                  INTEGER (0..4),
        sl8                                      INTEGER (0..7),
        sl10                                     INTEGER (0..9),
        sl16                                     INTEGER (0..15),
        sl20                                     INTEGER (0..19)
    }
            OPTIONAL,
    duration(monitoring duration)            INTEGER (2..2559)
    monitoringSymbolsWithinSlot              BIT   STRING   (SIZE
(14))            OPTIONAL,
    (monitoring symbols within slot)
    nrofCandidates                           SEQUENCE {
    (number of PDCCH candidates for each aggregation level)
        aggregationLevel1                        ENUMERATED   {n0,   n1,
n2, n3, n4, n5, n6, n8},
        aggregationLevel2                        ENUMERATED   {n0,   n1,
n2, n3, n4, n5, n6, n8},
        aggregationLevel4                        ENUMERATED   {n0,   n1,
n2, n3, n4, n5, n6, n8},
        aggregationLevel8                        ENUMERATED   {n0,   n1,
n2, n3, n4, n5, n6, n8},
```

```
                    aggregationLevel16              ENUMERATED    {n0,
n1, n2, n3, n4, n5, n6, n8}
                    },

              searchSpaceType                 CHOICE {
              (search space type)
                    -- Configures this search space as common search space (CSS) and DCI
       formats to monitor.
                    common                      SEQUENCE {
              (common search space)
                    }
                    ue-Specific                 SEQUENCE {
              (UE-specific search space)
                          -- Indicates whether the UE monitors in this USS for DCI formats
       0-0 and 1-0 or for formats 0-1 and 1-1.
                    formats                     ENUMERATED
              {formats0-0-And-1-0, formats0-1-And-1-1},
                          ...
                    }
```

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the examples given below are not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below.

C-RNTI: used to schedule a UE-specific PDSCH

Temporary cell RNTI (TC-RNTI): used to schedule a UE-specific PDSCH

Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI(SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH

Transmit power control for SRS RNTI (TPC-SRS-RNTI): used to indicate a power control command regarding an SRS

The DCI formats enumerated above may follow the definitions given in Table 19 below.

[Table 19]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In a 5G system, the search space at aggregation level L in connection with control resource set p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- *L:* aggregation level
- $n_{CI}$: carrier index
- $N_{CCE,p}$: total number of CCEs existing in control resource set *p*
-

$$n_{s,f}^{\mu}$$

: slot index

-

$M_{s,max}^{(L)}$: number of PDCCH candidates at aggregation level L

-

- $m_{s,n_{CI}} = 0, \ldots, M_{s,max}^{(L)}$ -1: PDCCH candidate index at aggregation level

L

- *i* = 0, ..., *L* -1

- $Y_{p,n_{s,f}^{\mu}} = \left( A_p \cdot Y_{p,n_{s,f}^{\mu}-1} \right) mod\, D$ , $Y_{p,-1} = n_{RNTI} \neq 0$ , $A_p =$ 39827 $for\, pmod3 = 0$ , $A_p = 39829\, for\, pmod3 = 1$ , $A_p =$ 39839 $for\, pmod3 = 2,\ D = 65537$

- $n_{RNTI}$ : UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In a 5G system, multiple search space sets may be configured by different parameters (for example, parameters in Table 18), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

In LTE and NR systems, a UE may perform a procedure in which, while being connected to a serving base station, the UE may report capability supported by the UE to the corresponding base station. In the following description, the above-described procedure will be referred to as a UE capability report.

The base station may transfer a UE capability enquiry message to a UE in a connected state so as to request a capability report. The message may include a UE capability request with regard to each radio access technology (RAT) type of the base station. The RAT type-specific request may include supported frequency band combination information and the like. In addition, in the case of the UE capability enquiry message, UE capability with regard to multiple RAT types may be requested through one RRC message container transmitted by the base station, or the base station may transfer a UE capability enquiry message including multiple UE capability requests with regard to respective RAT types. That is, a capability enquiry may be repeated multiple times in one message, and the UE may configure a UE capability information message corresponding thereto and report the same multiple times. In next-generation mobile communication systems, a UE capability request may be made regarding multi-RAT dual connectivity (MR-DC), such as NR, LTE, E-UTRA - NR dual connectivity (EN-DC). The UE capability enquiry message may be transmitted initially after the UE is connected to the base station, in general, but may be requested in any condition if needed by the base station.

Upon receiving the UE capability report request from the base station in the above step, the UE may configure UE capability according to band information and RAT type requested by the base station. The method in which the UE configures UE capability in an NR system is summarized below.

1. If the UE receives a list regarding LTE and/or NR bands from the base station at a UE capability request, the UE constructs band combinations (BCs) regarding EN-DC and NR standalone (SA). That is, the UE configures a candidate list of BCs regarding EN-DC and NR SA, based on bands received from the base station at a request through FreqBandList. In addition, bands may have priority in the order described in FreqBandList.

2. If the base station configures "eutra-nr-only" flag or "eutra" flag and requests a UE capability report, the UE removes everything related to NR SA BCs from the configured BC candidate list. Such an operation may occur only if an LTE base station (eNB) requests "eutra" capability.

3. The UE then removes fallback BCs from the BC candidate list configured in the above step. As used herein, a fallback BC refers to a BC that can be obtained by removing a band corresponding to at least one SCell from a specific BC, and since a BC before removal of the band corresponding to at least one SCell can already cover a fallback BC, the same may be omitted. This step is applied in MR-DC as well, that is, LTE bands are also applied. BCs remaining after the above step constitute the final "candidate BC list".

4. The UE may select BCs appropriate for the requested RAT type from the final "candidate BC list" and select BCs to report. In this step, the UE configures supportedBandCombinationList in a determined order. That is, the UE configures BCs and UE capability to report according to a preconfigured rat-Type order. (nr - > eutra-nr -> eutra). In addition, the UE may configure featureSetCombination regarding the configured supportedBandCombinationList and configures a list of "candidate feature set combinations" from a candidate BC list from which a list regarding fallback BCs (including capability of the same or lower step) is removed. The "candidate feature set combinations" may include all feature set combinations regarding NR and EUTRA-NR BCs, and may be acquired from feature set combinations of containers of UE-NR-Capabilities and UE-MRDC-Capabilities.

5. If the requested RAT type is eutra-nr and has an influence, featureSetCombinations is included on both containers of UE-MRDC-Capabilities and UE-NR-Capabilities. However, the feature set of NR is included only in UE-NR-Capabilities.

After the UE capability is configured, the UE transfers a UE capability information message including the UE capability to the base station. The base station performs scheduling and transmission/reception management appropriate for the UE, based on the UE capability received from the UE.

In the following description of the disclosure, higher layer signaling may refer to signaling corresponding to at least one signaling among the following signaling, or a combination of one or more thereof.

- MIB
- System information block (SIB) or SIB X (X=1, 2, ...)
- RRC
- MAC CE

In addition, L1 signaling may refer to signaling corresponding to at least one signaling method among signaling methods using the following physical layer channels or signaling, or a combination of one or more thereof.

- PDCCH
- DCI
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- PUCCH
- UCI

Hereinafter, determining priority between A and B may be variously described as, for example, selecting an entity having a higher priority according to a predetermined priority rule and performing an operation corresponding thereto, or omitting or dropping operations regarding an entity having a lower priority.

As used herein, the term "slot" may generally refer to a specific time unit corresponding to a transmit time interval (TTI), may specifically refer to a slot used in a 5G NR system, or may refer to a slot or a subframe used in a 4G LTE system.

As used herein, reception of a CSI-RS resource may be understood as reception of a CSI-RS corresponding to the CSI-RS resource. In addition, channel estimation or CSI calculation for a CSI-RS port may be understood as channel estimation or CSI calculation performed by measuring a CSI-RS corresponding to the CSI-RS port.

Hereinafter, the above examples may be described through several embodiments, but they are not independent of each other, and one or more embodiments may be applied simultaneously or in combination.

<First embodiment: CSI report and CSI resource configuration method for network energy saving

As an embodiment of the disclosure, a CSI report and CSI resource configuration method for network energy saving in the UE and the base station is described. This embodiment may be operated in combination with other embodiments in the disclosure.

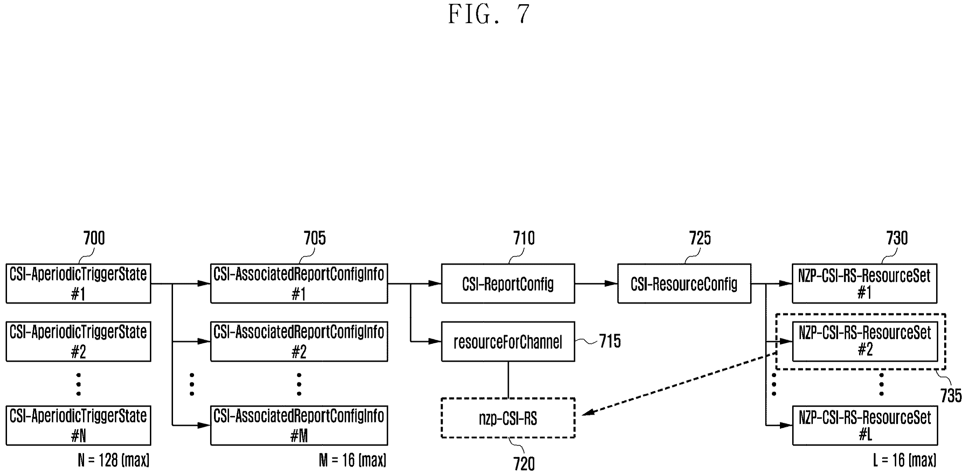

FIG. 7 is a diagram illustrating an example of a structure of aperiodic CSI report signaling which may be configured for a UE through higher layer signaling according to an embodiment of the disclosure.

A maximum of 128 values of the higher layer signaling CSI-AperiodicTriggerState 700 may be configured for the UE by the base station, and one value of CSI-AperiodicTriggerState may be mapped to a codepoint in a CSI request field in DCI. The higher layer signaling reportTriggerSize related to the number of codepoints of a CSI request may be configured for the UE by the base station, reportTriggerSize may be an integer among 0 to 6, and when this value is $N_{Ts}$, the UE may expect that there are $2^{N_{Ts}}$ codepoints in a CSI request field.

- If all bits in a CSI request field in DCI received by the UE are 0, the UE may consider that there is no information that triggers aperiodic CSI report transmission (additionally, aperiodic CSI-RS reception may also be indicated).
- If the number of the values of CSI-AperiodicTriggerState configured for the UE through higher layer signaling is greater than $2^{N_{Ts}}-1$, the UE receives a MAC CE from the base station, and the MAC CE may select ($2^{N_{Ts}}-1$) number of values among the multiple values of CSI-AperiodicTriggerState configured through higher layer signaling.
- If the number of the values of CSI-AperiodicTriggerState configured for the UE through higher layer signaling is smaller than or equal to $2^{N_{Ts}}-1$, the multiple values of CSI-AperiodicTriggerState configured through higher layer signaling may be mapped to codepoints of each CSI request field in sequence. For example, if 32 values of CSI-AperiodicTriggerState are configured for the UE through higher layer signaling and the higher layer signaling reportTriggerSize is configured to be 6, that is, 63 (=$2^6-1$) codepoints of a CSI request field are available for aperiodic CSI reporting, the UE may understand that the values of CSI-AperiodicTriggerState are mapped to codepoints of the CSI request in ascending order according to the sequence of the values since the number of the configured values of CSI-AperiodicTriggerState is smaller than the number of the codepoints of the CSI request field.

One to a maximum of 16 values of CSI-AssociatedReportConfigInfo may be configured for the UE in the higher layer signaling CSI-AperiodicTriggerState 700

(705). One value of CSI-ReportConfig 710 may be included in one piece of CSI-AssociatedReportConfigInfo configuration information, CSI-ResourceConfig 725 may be included in CSI-ReportConfig, and in a case of aperiodic CSI reporting, one to a maximum of 16 values of NZP-CSI-RS-ResourceSet 730 may be included in CSI-ResourceConfig. In addition, resourceForChannel 715 may be included in CSI-AssociatedReportConfigInfo configuration information, and one of multiple values of NZP-CSI-RS-ResourceSet, which may be included in CSI-ResourceConfig in a case of aperiodic CSI reporting, may be selected through the parameter nzp-CSI-RS 720 which may be configured through the parameter resourceForChannel (735). That is, in a case of aperiodic CSI reporting, even when multiple values of NZP-CSI-RS-ResourceSet are associated, one aperiodic CSI-RS resource set associated with one aperiodic CSI report configuration may be considered for one value of CSI-AssociatedReportConfigInfo.

In the following, an association relationship between a CSI report and a CSI-RS resource set is described according to a time domain behavior of a CSI report and a CSI-RS resource.

- When considering a periodic CSI report, the UE may expect that there is one periodic CSI-RS resource set which may be associated with the report and used.
- When considering a semi-persistent CSI report, the UE may expect that there is one periodic or semi-persistent CSI-RS resource set which may be associated with the report and used.
- When the UE considers an aperiodic CSI report, if the aperiodic CSI report is associated with a periodic and semi-persistent CSI-RS resource set, the number of values of NZP-CSI-RS-ResourceSet which may be included in the higher layer signaling CSI-ResourceConfig may be limited to 1. If the aperiodic CSI report is associated with an aperiodic CSI-RS resource set, even when multiple values (a maximum of 16 values) of NZP-CSI-RS-ResourceSet, which may be included in the higher layer signaling CSI-ResourceConfig, are possible, the UE may select and consider one aperiodic CSI-RS resource set associated with one aperiodic CSI report configuration for one value of CSI-AssociatedReportConfigInfo through the higher layer signaling resourceForChannel.

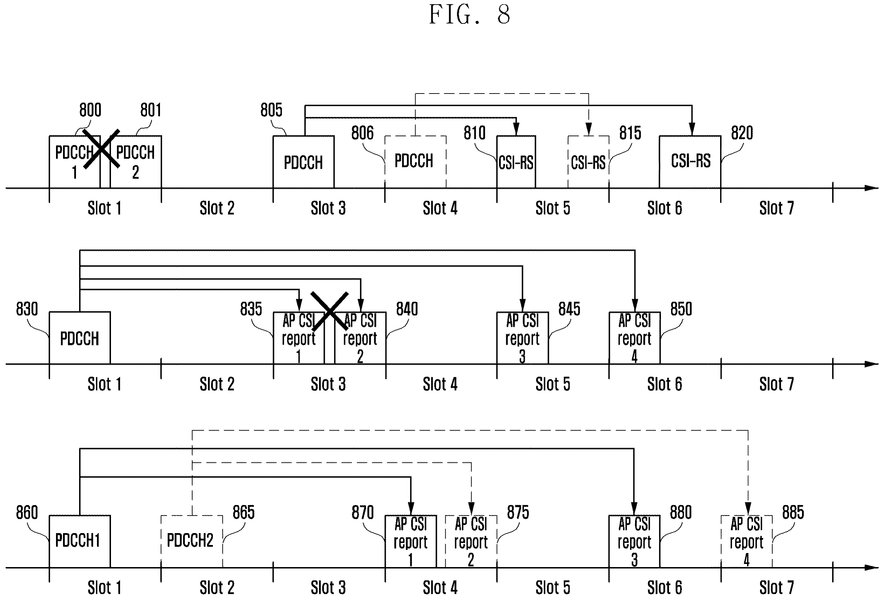

FIG. 8 is a diagram illustrating an example of aperiodic CSI report and aperiodic CSI-RS triggering situations and restrictions according to an embodiment of the disclosure.

The UE may not expect to receive multiple DCIs each having a CSI request field including information that triggers aperiodic CSI report transmission (additionally, aperiodic CSI-RS reception may also be indicated) in one slot in one cell. Therefore, if both PDCCH 1 800 and PDCCH 2 801 have a CSI request field including information that triggers aperiodic CSI report transmission (additionally, aperiodic CSI-RS reception may also be indicated), the UE may not expect that the two PDCCHs are received within one slot. Therefore, if the base station desires to transmit, to the UE, multiple PDCCHs each having a CSI request field including information that triggers aperiodic CSI report transmission (additionally, aperiodic CSI-RS reception may also be indicated), the UE may receive respective PDCCHs 805 and 806 in two different slots.

If the UE receives DCI having a CSI request field including information that triggers aperiodic CSI report transmission (additionally, aperiodic CSI-RS reception may also be indicated) in a particular slot in the same cell group, the UE may not expect to receive another DCI having a CSI request field including information that triggers aperiodic CSI report transmission (additionally, aperiodic CSI-RS reception may also be indicated) in any other slots overlapping with the slot in the cell group.

The UE may transmit, to the base station through a UE capability report, a restriction on the number of CSI-RS resources simultaneously activatable in each cell and a restriction on the number of CSI-RS ports simultaneously activatable in each cell. The UE may report, to the base station, a natural number among 1 to 32 as the number of CSI-RS resources simultaneously activatable in each cell. The UE may report, to the base station, a multiple of 8 among 8 to 128 as the number of CSI-RS ports simultaneously activatable in each cell. Whether the UE receives multiple aperiodic CSI-RS resources in one slot or receives one aperiodic CSI-RS resource in each slot, the UE may receive aperiodic CSI-RS resources 810, 815, and 820 triggered through PDCCHs from the base station under the restrictions on the number of CSI-RS resources and the number of CSI-RS ports.

The UE may not expect that multiple aperiodic CSI reports triggered through one PDCCH are transmitted in the same slot in one cell. If aperiodic CSI report 1 835, aperiodic CSI report 2 840, aperiodic CSI report 3 845, and aperiodic CSI report 4 850 are triggered by one PDCCH 830, the UE does not expect a case of aperiodic CSI report 1 835 and aperiodic CSI report 2 840, which are multiple CSI reports triggered by one PDCCH 830, and aperiodic CSI report 3 845 and aperiodic CSI report 4 850 being triggered in different slots may be allowed.

The UE may allow both a case where respective aperiodic CSI reports triggered by different PDCCHs exist in the same slot, for example, aperiodic CSI report 1 870 triggered by PDCCH 1 860 and aperiodic CSI report 2 875 triggered by PDCCH 2 865 exist in the same slot, and a case where one aperiodic CSI reporting triggered by each different PDCCH exists in each slot, for example, only one CSI report exists in each slot, such as aperiodic CSI report 3 880 triggered by PDCCH 1 860 and aperiodic CSI report 2 885 triggered by PDCCH 2 865.

Meanwhile, the base station may activate or deactivate some or all of power amplifiers used for downlink transmission for network energy saving. If the base station activates or deactivates some or all of power amplifiers, the downlink performance of all UEs supported by the base station may be affected thereby. Therefore, the base station may consider the effect on the UE performance when adjusting the activation or deactivation for the power amplifiers.

To this end, in order to identify a difference in the UE performance when activating or deactivating a particular number or particular region of power amplifiers, the base station may transmit CSI-RSs having different numbers of ports to a UE, and expect that the UE computes a CSI report for each of the CSI-RSs having the different numbers of ports and report the CSI report to the base station. The base station having received the CSI report may determine which performance the UE exhibits for each of the CSI-RSs having the different numbers of ports, and may finally determine which power amplifier is to be deactivated or activated by collecting reports from multiple UEs capable of reporting such a CSI report and referring to the reports.

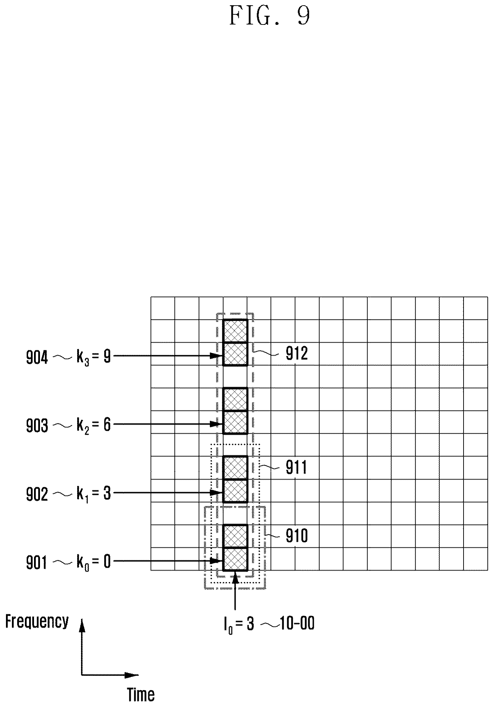

FIG. 9 is a diagram illustrating an example of a transmission situation of multiple overlapping CSI-RS resources according to an embodiment of the disclosure.

RE mapping of a CSI-RS resource 910 of two ports, a CSI-RS resource 911 of four ports, and a CSI-RS resource 912 of eight ports may be configured to overlap with each other for the UE by the base station through higher layer signaling as illustrated in FIG. 9.

For example, the CSI-RS resource of two ports may be defined based on Row 3 in Table 6 above, and $l_0$=3 (900) and $k_0$=0 (901) may be configured for the UE by the base station through higher layer signaling. Accordingly, the UE may determine that the CSI-RS resource of two ports is mapped to a third symbol among symbol indexes starting from number 0 in an RB in a particular slot, and a 0-th RE and a first RE among RE indexes starting from number 0 (910).

In addition, the CSI-RS resource of four ports may be defined based on Row 4 in Table 6 above, and $l_0$=3 (900) and $k_0$=0 (901) may be configured for the UE by the base station through higher layer signaling. Accordingly, the UE may determine that the CSI-RS resource of four ports is mapped to a third symbol among symbol indexes starting from number 0 in an RB in a particular slot, and a 0-th RE, a first RE, a third RE, and a fourth RE among RE indexes starting from number 0 (911).

In addition, the CSI-RS resource of eight ports may be defined based on Row 6 in Table 6 above, and $l_0$=3 (900), $k_0$=0 (901), $k_1$=3 (902), $k_2$=6 (903), and $k_3$=9 (904) may be configured for the UE by the base station through higher layer signaling. Accordingly, the UE may determine that the CSI-RS resource of eight ports is mapped to a third symbol among symbol indexes starting from number 0 in an RB in a particular slot, and a 0-th RE, a first RE, a third RE, a fourth RE, a sixth RE, a seventh RE, a ninth RE, and a tenth RE among RE indexes starting from number 0 (912).

Therefore, the UE may expect that the three CSI-RS resources of two, four, and eight ports overlap on the 0-th RE and the first RE of the third symbol, and the UE may expect that the two CSI-RS resources of four and eight ports overlap on the third RE and the fourth RE of the third symbol. As described above, when the base station transmits multiple different CSI-RS resources having different numbers of ports to the UE to the same symbol, the base station may avoid CSI-RS resource transmission on different time resources to reduce energy consumption.

However, in order for the UE to report a CSI report for multiple CSI-RS resources having different numbers of CSI-RS ports to the base station in an aperiodic CSI report type as described above, multiple values of CSI-AssociatedReportConfigInfo may be configured for the UE in the higher layer signaling CSI-AperiodicTriggerState mapped to one codepoint of a CSI request field in DCI which may be received from the base station, CSI-ReportConfig and a CSI-RS resource set may be configured in each value of CSI-AssociatedReportConfigInfo, and each CSI-RS resource set associated with one value of CSI-ReportConfig may need to have a different number of CSI-RS ports. For example, three values of CSI-AssociatedReportConfigInfo may be configured for the UE in a particular value of CSI-AperiodicTrigger-State, a CSI-RS resource set associated with CSI-ReportConfig included in a first value of CSI-AssociatedReportConfigInfo may include one or more CSI-RS resources each having two ports, a CSI-RS resource set associated with CSI-ReportConfig included in a second value of CSI-AssociatedReportConfigInfo may include one or more CSI-RS resources each having four ports, and a CSI-RS resource set associated with CSI-ReportConfig included in a third value of CSI-AssociatedReportConfigInfo may include one or more CSI-RS resources each having eight ports.

Under the above configuration, if the UE receives a CSI request field having a corresponding codepoint value through one DCI, the UE is unable to transmit two or more of respective aperiodic CSI reports corresponding to the first, second and third values of CSI-AssociatedReportConfigInfo in the same slot, and may report only a single CSI report in each slot. As described above, even if the UE receives multiple CSI-RS resources, some REs of which overlap on the same symbol position as illustrated in FIG. 9, the UE needs to report CSI reports therefor in different slots. Therefore, this operation may be inefficient in view of time resource usage. If the UE desires to report such multiple CSI reports in the same slot as one CSI report, the UE may need to receive two or more DCIs including aperiodic CSI report trigger information in different slots. Therefore, it may be still inefficient in that the UE needs to perform aperiodic CSI reporting by receiving multiple DCIs.

Furthermore, in this case, the UE may fail to transmit some or all of the aperiodic CSI reports triggered by the base station for the purpose of network energy saving management, according to a CPU occupation time and a priority rule by which a CSI report having a low priority is disregarded according to a priority when multiple CSI reports overlap in the time dimension. Therefore, the base station may need to trigger a CSI report again or needs to perform network energy saving management without corresponding information if the base station fails to receive the CSI report from the UE within a particular time. Eventually, even from the perspective of scheduling, it may be inflexible and inefficient.

Therefore, the base station may transmit multiple CSI-RS resources having different numbers of ports (hereinafter, interchangeably referred to as antenna ports) to the UE, and then configure flexible higher layer signaling so as to receive respective CSI reports for the CSI-RS resources having the different numbers of ports from the UE. To this end, the UE may receive a higher layer signaling configuration for a CSI report and a CSI-RS resource, based on a combination of at least one of the following various methods from the base station.

[Method 1-1]

If a CSI report corresponding to CSI-RS resources having different numbers of ports is configured for the UE by the base station through higher layer signaling for the purpose of network energy saving, multiple values of CSI-ReportConfig are configured for the UE by the base station, and the UE may assume that the multiple values of CSI-ReportConfig are associated with CSI-RS resource sets each including a CSI-RS resource of a different number of ports. In order to configure the CSI report corresponding to the CSI-RS resources having the different numbers of ports, the multiple values of CSI-ReportConfig may be configured to be associated for the UE by the base station through higher layer signaling. The signaling that associates the multiple values of CSI-ReportConfig may be referred to as a linkage. A linkage which may be configured for the UE through higher layer signaling may be configured through the following examples.

- As one method, the UE may assume that multiple values of CSI-ReportConfig may be configured in one CSI-AssociatedReportConfigInfo configuration. When multiple values of CSI-ReportConfig are configured in one value of CSI-AssociatedReportConfigInfo as described above, the multiple values of CSI-ReportConfig may be considered as being implicitly associated with each other, or IDs for linkage may be explicitly configured in the multiple values of CSI-ReportConfig through higher layer signaling so that two or more values of CSI-ReportConfig having the same ID values may be considered as being associated with each other. Additionally, since multiple values of CSI-ReportConfig are configured for the UE in one CSI-AssociatedReportConfigInfo configuration, the time domain operations of the values of CSI-ReportConfig may be assumed to be the same. If the multiple values of CSI-ReportConfig all relate to aperiodic CSI reporting, the UE may expect that a number of values of the higher layer signaling resourceForChannel corresponding to the number of the values of CSI-ReportConfig are configured in the CSI-AssociatedReportConfigInfo configuration. In addition, the UE may select one of multiple values of NZP-CSI-RS-ResourceSet, which may be included in CSI-ResourceConfig in a case of aperiodic CSI reporting, by using the parameter nzp-CSI-RS which may be configured through each value of resourceForChannel.

  * For example, first to third values of CSI-ReportConfig may be configured for the UE in one CSI-AssociatedReportConfigInfo configuration, a CSI-RS resource set including a CSI-RS resource of two ports may be associated with the first value of CSI-ReportConfig, a CSI-RS resource set including a CSI-RS resource of four ports may be associated with the second value of CSI-ReportConfig, and a CSI-RS resource set including a CSI-RS resource of four ports may be associated with the third value of CSI-ReportConfig. In this case, since three values of CSI-ReportConfig are configured in one CSI-AssociatedReportConfigInfo configuration, the UE may consider that the three values of CSI-ReportConfig are implicitly associated with each other, even with no additional higher layer signaling. Alternatively, if respective linkage IDs of the three values of CSI-ReportConfig are configured as, for example, 0 in the one CSI-AssociatedReportConfigInfo configuration, the UE may consider that the three values of CSI-ReportConfig are explicitly associated with each other.

- As another method, the UE may consider that two or more values of CSI-AssociatedReportConfigInfo are associated with each other. In this case, the UE may consider that one value of CSI-ReportConfig is configured in each value of CSI-AssociatedReportConfigInfo. Multiple values of CSI-AssociatedReportConfigInfo may be configured for the UE in the higher layer signaling CSI-AperiodicTriggerState, and an ID for linkage may be explicitly configured in each of the multiple values of CSI-AssociatedReportConfigInfo through higher layer signaling. The UE may consider that two or more values of CSI-AssociatedReportConfigInfo having the same ID value are associated with each other. Alternatively, the UE may expect that, as an example of an association relationship between the higher layer signalings CSI-AperiodicTriggerState and CSI-AssociatedReportConfigInfo, additional higher layer signaling such as CSI-linkedReportConfiglist is configured, CSI-linkedReportConfiglist is configured in CSI-AperiodicTriggerState, and multiple values of CSI-AssociatedReportConfigInfo are configured in the CSI-linkedReportConfiglist. In this case, the UE may consider that the multiple values of CSI-AssociatedReportConfigInfo configured in the CSI-linkedReportConfiglist are implicitly associated with each other.

- As another method, the UE may consider that two or more values of CSI-AperiodicTriggerState are associated with each other. The UE may receive DCI from the base station, and aperiodic CSI report transmission related to one of multiple values of CSI-AperiodicTriggerState may be triggered through a CSI request field in the DCI. In this case, if two or more values of CSI-AperiodicTriggerState are associated with each other, even when aperiodic CSI report transmission related to one value of CSI-AperiodicTriggerState is triggered through DCI, the UE may consider that the UE has received a trigger indication for a value of CSI-AperiodicTriggerState associated thereto from the base station. In this case, the UE may expect that one or more values of CSI-AssociatedReportConfigInfo are configured in the higher layer signaling CSI-AperiodicTriggerState, and one value of CSI-ReportConfig are configured in each value of CSI-AssociatedReportConfigInfo. The UE may consider that, with respect to an association between two or more values of CSI-AperiodicTriggerState, an ID for linkage is explicitly configured in each of the multiple values of CSI-AperiodicTriggerState through higher layer signaling, and two or more values of CSI-AperiodicTriggerState having the same ID value are associated with each other.

Alternatively, if the number of the values of CSI-AperiodicTriggerState configured through higher layer signaling is greater than a value smaller by 1 than the number of codepoints of a CSI request field in DCI, the UE may map some of all the values of CSI-AperiodicTriggerState to codepoints of the CSI request field through a MAC CE. In this case, two or more values of CSI-AperiodicTriggerState may be mapped to one codepoint of the CSI request field through a MAC CE. If two or more values of CSI-AperiodicTriggerState are mapped to one codepoint of a CSI request field, the UE may consider that the multiple values of CSI-AperiodicTriggerState are associated with each other. Even when the number of the values of CSI-AperiodicTriggerState configured through higher layer signaling is smaller than or equal to a value smaller by 1 than the number of codepoints of a CSI request field in DCI, two or more values of CSI-AperiodicTriggerState may be mapped to one codepoint of the CSI request field according to a particular rule. For example, if the same ID value for linkage is configured in two or more values of CSI-AperiodicTriggerState, the UE may determine that the multiple values of CSI-AperiodicTriggerState having the same ID for linkage are mapped to one codepoint of a CSI request field.

In order to configure a CSI report corresponding to CSI-RS resources having different numbers of ports, the multiple values of CSI-ReportConfig may be configured to be associated for the UE by the base station through higher layer signaling.

Through the above various methods, in order to configure a CSI report corresponding to CSI-RS resources having different numbers of CSI-RS ports, the multiple values of CSI-ReportConfig may be configured to be associated for the UE by the base station, and the UE may perform CSI report transmission to the base station on the same time position (e.g., the same slot and/or the same symbol) even though the CSI report transmission has been triggered through one DCI with respect to the multiple values of CSI-ReportConfig.

With respect to the above various methods, multiple values of CSI-ReportConfig may be associated, and a CSI-RS resource set existing in CSI-ResourceConfig included in each value of CSI-ReportConfig may include CSI-RS resources having the same number of CSI-RS ports. For example, the values of CSI-ReportConfig, such as first to third values of CSI-ReportConfig, may be associated with each other through the above various methods, a CSI-RS resource set including a CSI-RS resource of two ports may be associated with the first value of CSI-ReportConfig, a CSI-RS resource set including a CSI-RS resource of four ports may be associated with the second value of CSI-ReportConfig, and a CSI-RS resource set including a CSI-RS resource of four ports may be associated with the third value of CSI-ReportConfig.

However, when the base station transmits overlapping CSI-RS resources having different numbers of CSI-RS ports to the UE, that is, when REs corresponding to a CSI-RS resource having a smaller number of CSI-RS ports are included in REs corresponding to a CSI-RS resource having a larger number of CSI-RS ports, the following method may be additionally used as a method of individually defining CSI-RS resources having different numbers of CSI-RS ports. One CSI-RS resource having the largest number of CSI-RS ports among different numbers of CSI-RS ports for which channel estimation is to be performed is defined (e.g., the CSI-RS resource may be defined as a CSI-RS resource having eight CSI-RS ports when channel estimation is to be performed on two, four, and eight CSI-RS ports), and the UE may also use a method of estimating channel states according to different numbers of CSI-RS ports by using a part or the entirety of RE mapping of the resource. That is, the UE may identify one CSI-RS resource having the largest number of CSI-RS ports among different numbers of CSI-RS ports for which channel estimation is to be performed, and may assume that the CSI-RS resource is commonly included in all the respective CSI-RS resource sets included in the first to third values of CSI-ReportConfig. Although the CSI-RS resource has a particular number of CSI-RS ports based on higher layer signaling (e.g., the CSI-RS resource may be defined as a CSI-RS resource having eight CSI-RS ports when channel estimation is to be performed on two, four, and eight CSI-RS ports), the UE may be configured to, according to which value of CSI-ReportConfig is associated with the CSI-RS resource, perform channel estimation for some or all ports of the CSI-RS resource and report a CSI report therefor to the base station. The base station may configure, for the UE, a definition of the number of CSI-RS ports to be used at the time of actual channel estimation rather than the number of CSI-RS ports based on a higher layer signaling configuration, in each CSI-RS resource set configuration, in each CSI-ReportConfig configuration, in each CSI-AssociatedReportConfigInfo configuration, or in each value of CSI-AperiodicTriggerState.

[Method 1-2]

In a case where an association scheme between multiple pieces of CSI-ReportConfig configuration information considered in the above [Method 1-1] is used, the multiple values of CSI-ReportConfig are associated with one identical CSI-RS resource set, and the CSI-RS resource set may include multiple CSI-RS resources having different numbers of CSI-RS ports. For example, first to third values of CSI-ReportConfig may be configured for the UE in one CSI-AssociatedReportConfigInfo configuration, the three values of CSI-ReportConfig are all associated with one CSI-RS resource set, and the CSI-RS resource set may include a CSI-RS resource of two ports, a CSI-RS resource of four ports, and a CSI-RS resource of eight ports.

If the association scheme between multiple pieces of CSI-ReportConfig configuration information is used, a restriction that only CSI-RS resources configured to have the same number of ports may be included in a single CSI-RS resource set is released, and the base station may configure, for the UE and through higher layer signaling, that multiple CSI-RS resources configured to have different numbers of ports are included in a single CSI-RS resource set. In this case, information related to a particular number of CSI-RS ports is configured in each value of CSI-ReportConfig through higher layer signaling as additional information, whereby the UE may use the information related to the particular number of CSI-RS ports when computing CSI through a corresponding CSI report configuration. For example, if additional information on CSI computation for two ports is configured in the first value of CSI-ReportConfig and, similarly, additional information on CSI computation for four and eight ports is configured in the second and third values of CSI-ReportConfig, when the UE computes CSI to perform CSI reporting based on the first, second, and third value of CSI-ReportConfig, the UE may use respective CSI-RS resources having two, four, and eight CSI-RS ports included in the same CSI-RS resource set associated with the first, second, and third value of CSI-ReportConfig.

In addition, similarly to the above [Method 1-1], when the base station transmits overlapping CSI-RS resources having different numbers of CSI-RS ports to the UE, that is, when REs corresponding to a CSI-RS resource having a smaller number of CSI-RS ports are included in REs corresponding to a CSI-RS resource having a larger number of CSI-RS ports, the following method may be additionally used as a method of individually defining CSI-RS resources having different numbers of CSI-RS ports. One CSI-RS resource having the largest number of CSI-RS ports among different numbers of CSI-RS ports for which channel estimation is to be performed is defined (e.g., the CSI-RS resource may be defined as a CSI-RS resource having eight CSI-RS ports when channel estimation is to be performed on a case of two, four, and eight CSI-RS ports), and the UE may also use a method of estimating channel states according to different numbers of CSI-RS ports by using a part or the entirety of RE mapping of the resource. That is, the UE may identify one CSI-RS resource having the largest number of CSI-RS ports among different numbers of CSI-RS ports for which channel estimation is to be performed, and may assume that the CSI-RS resource is included in the same CSI-RS resource set associated with the first to third values of CSI-ReportConfig. Although the CSI-RS resource has a particular number of CSI-RS ports based on higher layer signaling (e.g., the CSI-RS resource may be defined as a CSI-RS resource having eight CSI-RS ports when channel estimation is to be performed on two, four, and eight CSI-RS ports), the UE may be configured to, according to which value of CSI-ReportConfig is associated with the CSI-RS resource, perform channel estimation for some or all ports of the CSI-RS resource and transmit a CSI report therefor to the base station. The base station may configure, for the UE, information on the number of CSI-RS ports to be used at the time of actual channel estimation rather than the number of CSI-RS ports based on a higher layer signaling configuration, in each CSI-RS resource set configuration, in each CSI-ReportConfig configuration, in each CSI-AssociatedReportConfigInfo configuration, or in each value of CSI-AperiodicTriggerState.

In order to configure a CSI report corresponding to multiple CSI-RS resources having different numbers of CSI-RS ports, the multiple values of CSI-ReportConfig are associated with each other, the associated values of CSI-ReportConfig are associated with one identical CSI-RS resource set, and the CSI-RS resource set may include multiple CSI-RS resources having different numbers of CSI-RS ports. Even though CSI report transmission has been triggered through one DCI with respect to the multiple associated values of CSI-ReportConfig, the UE may perform CSI report transmission to the base station on the same time position (e.g., the same slot and/or the same symbol).

[Method 1-3]

The UE may expect that one value of CSI-ReportConfig is associated with multiple CSI-RS resource sets. For example, the UE may expect that one value of CSI-ReportConfig is configured in one value of the higher layer signaling CSI-AssociatedReportConfigInfo, and three CSI-RS resource sets are included in the value of CSI-ReportConfig. In this case, a CSI-RS resource included in a first CSI-RS resource set has two CSI-RS ports and, similarly, respective CSI-RS resources included in second and third CSI-RS resource sets has four and eight CSI-RS ports. Accordingly, the UE may include CSI for different numbers of CSI-RS ports in a CSI report for one value of CSI-ReportConfig, and report the CSI report to the base station. Multiple CSI-RS resource sets being associated with one value of CSI-ReportConfig as described above are possible when the CSI-RS resource sets are periodic or semi-persistent CSI-RS resource sets. In a case of an aperiodic CSI-RS resource set, multiple values of resourceForChannel may be included in one value of the higher layer signaling CSI-AssociatedReportConfigInfo, each value of resourceForChannel selects a CSI-RS resource set, and multiple CSI-RS resource sets may be associated with one value of CSI-ReportConfig, based on the selection. The UE may select the multiple associated CSI-RS resource sets and reflect same on a CSI report.

As another example, if new reportQuantity, which may indicate CSI computation for different numbers of ports, is defined in CSI-ReportConfig, and configured, the UE may associate different CSI-RS resource sets in the CSI-Report-Config to compute CSI and report a report.

With respect to the above [Method 1-3], a CSI-RS resource having the same number of CSI-RS ports may be commonly included in multiple CSI-RS resource sets included in one value of CSI-ReportConfig, and the CSI-RS resource may have the largest number of CSI-RS ports among different numbers of CSI-RS ports. That is, similarly to the method of configuring an additional CSI-RS resource described in the above [Method 1-1], one CSI-RS resource having the largest number of CSI-RS ports among different numbers of CSI-RS ports for which channel estimation is to be performed is defined (e.g., the CSI-RS resource may be defined as a CSI-RS resource having eight CSI-RS ports when channel estimation is to be performed on two, four, and eight CSI-RS ports), and the UE may also use a method of estimating channel states according to different numbers of CSI-RS ports by using a part or the entirety of RE mapping of the resource.

That is, one CSI-RS resource having the largest number of CSI-RS ports among different numbers of CSI-RS ports for which channel estimation is to be performed is defined, and the CSI-RS resource may be commonly included in all of multiple CSI-RS resource sets included in a corresponding value of CSI-ReportConfig. Although the CSI-RS resource has a particular number of CSI-RS ports based on higher layer signaling (e.g., the CSI-RS resource may be defined as a CSI-RS resource having eight CSI-RS ports when channel estimation is to be performed on two, four, and eight CSI-RS ports), the UE may define, according to which CSI-RS resource set in which the CSI-RS resource is included, that channel estimation for some or all ports of the CSI-RS resource is performed and a CSI report therefor is reported to the base station. For example, the UE performs channel estimation for eight ports for a CSI-RS resource of eight ports included in CSI-RS resource set 0, but performs channel estimation for four ports for the same CSI-RS resource included in CSI-RS resource set 1. The base station may configure, for the UE, a definition of the number of CSI-RS ports to be used at the time of actual channel estimation rather than the number of CSI-RS ports based on a higher layer signaling configuration, in each CSI-RS resource set configuration, in each CSI-ReportConfig configuration, in each CSI-AssociatedReportConfigInfo configuration, or in each value of CSI-AperiodicTriggerState.

In order to configure a CSI report corresponding to multiple CSI-RS resources having different numbers of CSI-RS ports, the UE may report a CSI report to the base station by using multiple CSI-RS resource sets in one value of CSI-ReportConfig from the base station. Each CSI-RS resource set may include a CSI-RS resource having a different number of CSI-RS ports, or include one CSI-RS resource having the largest number of CSI-RS ports among different numbers of CSI-RS ports. The UE may perform CSI report transmission to the base station on the same time position (e.g., the same slot and/or the same symbol) by using one CSI report with respect to CSI-ReportConfig described above.

[Method 1-4]

The UE may expect that one value of CSI-ReportConfig is associated with one CSI-RS resource set including multiple CSI-RS resources having different numbers of ports. For example, one value of CSI-ReportConfig is configured in one value of the higher layer signaling CSI-AssociatedReportConfigInfo, one CSI-RS resource set is included in the value of CSI-ReportConfig, and the CSI-RS resource set may include a first CSI-RS resource having two CSI-RS ports, a second CSI-RS resource having four CSI-RS ports, and a third CSI-RS resource having eight CSI-RS ports. Based on the value of CSI-ReportConfig and the CSI-RS resource set, the UE may compute CSI according to different numbers of ports and report the computed CSI to the base station.

In this case, allowance of multiple CSI-RS resources having different numbers of CSI-RS ports being included in the CSI-RS resource set associated with the value of CSI-ReportConfig may be indicated through a particular higher layer signaling configured in a corresponding value of CSI-AperiodicTriggerState, the value of CSI-AssociatedReportConfigInfo, the value of CSI-ReportConfig, or the CSI-RS resource set. The particular higher layer signaling may exist in various forms. For example, if the particular higher layer signaling exists in CSI-ReportConfig, the particular higher layer signaling may exist in a form of new reportQuantity, and if the particular higher layer signaling exists in CSI-AperiodicTriggerState, the particular higher layer signaling may be defined as a new parameter, such as multipleNrotPortsForresourceForChannel, to allow CSI computation based on multiple CSI-RS resources having different numbers of CSI-RS ports instead of the method of selecting one of multiple CSI-RS resource sets associated with CSI-ReportConfig, based on resource-ForChannel. The name of such a parameter is merely an example and does not limit the disclosure. Based on the signaling, the UE may select CSI-RS resources having multiple different numbers of ports associated with one value of CSI-ReportConfig, and reflect same for CSI computation and reporting.

In order to configure a CSI report corresponding to CSI-RS resources having different numbers of CSI-RS ports, an association between the single CSI-ReportConfig and one CSI-RS resource set may be configured for the UE by the base station, and the CSI-RS resource set may include multiple CSI-RS resources having different numbers of CSI-RS ports. Based on the CSI-ReportConfig associated with the CSI-RS resource set including multiple CSI-RS resources having different numbers of CSI-RS ports, the UE may estimate channels, based on the different numbers of CSI-RS ports, compute CSI for each channel, and then perform CSI report transmission therefor to the base station on the same time position (the same slot and/or symbol).

[Method 1-5]

In order for the UE to compute CSI for multiple CSI-RS resources having different numbers of ports and report the computed CSI to the base station, the base station may configure, in one CSI-RS resource set, a CSI-RS resource configured to have the largest number of ports among the different numbers of ports, and the CSI-RS resource set may be associated with one value of CSI-ReportConfig. That is, instead of the method of individually defining CSI-RS resources having different numbers of CSI-RS ports, one CSI-RS resource having the largest number of CSI-RS ports among different numbers of CSI-RS ports for which channel estimation is to be performed is defined (e.g., the CSI-RS resource may be defined as a CSI-RS resource having eight CSI-RS ports when channel estimation is to be performed on two, four, and eight CSI-RS ports), and a method of estimating channel states according to different numbers of CSI-RS ports by using a part or the entirety of RE mapping of the resource may be used. That is, the corresponding CSI-RS resource is included in one CSI-RS resource set included in the corresponding value of CSI-ReportConfig, and the CSI-RS resource has a particular number of CSI-RS ports based on higher layer signaling (e.g., the CSI-RS resource may be defined as a CSI-RS resource having eight CSI-RS ports when channel estimation is to be performed on two, four, and eight CSI-RS ports). However, the UE may perform channel estimation for some or all CSI-RS ports of the CSI-RS resource, compute individual CSI therefor, and report the computed CSI.

In order to configure a CSI report corresponding to CSI-RS resources having different numbers of CSI-RS ports, an association between the single CSI-ReportConfig and one CSI-RS resource set may be configured for the UE by the base station, and the CSI-RS resource set may include one CSI-RS resource having the largest number of CSI-RS ports among different numbers of CSI-RS ports. The UE may estimate channels for some or all CSI-RS ports of the CSI-RS resource, compute individual CSI for each channel, and perform CSI report transmission therefor to the base station on the same time position (e.g., the same slot and/or symbol).

The UE may report whether the UE supports at least one of [Method 1-1] to [Method 1-5] above, to the base station through UE capability signaling. A combination of at least one of [Method 1-1] to [Method 1-5] above may be configured for the UE by the base station through higher layer signaling, may be activated through MAC CE, may be indicated through L1 signaling, or may be notified through a combination of at least one of higher layer signaling, MAC CE, and L1 signaling. Alternatively, the UE may follow a scheme fixedly supported in a specification.

<Second embodiment: CPU calculation method for network energy saving>

As an embodiment of the disclosure, a CPU calculation scheme for network energy saving in the UE and the base station is described. This embodiment may be operated in combination with other embodiments in the disclosure.

The UE may receive one or more CSI-RS resources corresponding to different numbers of CSI-RS ports from the base station through a combination of at least one of [Method 1-1] to [Method 1-5] above, estimate a channel for each number of ports, compute each CSI corresponding thereto, and report the computed CSI to the base station. In this case, the UE may calculate a CPU value, based on the following various methods.

[Method 2-1-1]

When the UE receives one or more CSI-RS resources corresponding to different numbers of CSI-RS ports from the base station and computes CSI corresponding thereto through a combination of at least one of [Method 1-1] to [Method 1-5] above, the UE may calculate a CPU value as $N_{CPU}$ which is a CPU value maximally considerable by the UE in a corresponding cell. For the purpose of network energy saving, at the time of CSI reporting for a corresponding CSI report configuration and a CSI-RS resource set configuration, the UE and the base station may use maximum available CPUs of the UE to adjust other CSI computation not to be performed after the CSI reporting is triggered in a case of aperiodic CSI reporting.

[Method 2-1-2]

When the UE receives one or more CSI-RS resources corresponding to different numbers of CSI-RS ports from the base station and computes CSI corresponding thereto through a combination of at least one of [Method 1-1] to [Method 1-5] above, the UE may calculate a CPU value according to the number of CSI-RS resources. For example, when the UE receives CSI report and CSI-RS resource set configurations from the base station through a combination of at least one of [Method 1-1] to [Method 1-5] above for the purpose of network energy saving, if respective CSI-RS resources having two, four, or eight CSI-RS ports are configured through higher layer signaling, and the three CSI-RS resources have overlapping RE mapping, the UE may calculate a CPU value as 3 that is the number of the CSI-RS resources. As another example, when the UE receives CSI report and CSI-RS resource set configurations through a combination of at least one of [Method 1-1] to [Method 1-5] above from the base station for the purpose of network energy saving, even if a CSI-RS resource having eight CSI-RS ports is configured through higher layer signaling, and the UE estimates a channel for a resource corresponding to two, four, or eight CSI-RS ports in RE mapping of the above CSI-RS resource, and individually computes CSI for each number of ports, the UE may calculate a CPU value as 3 that is the number of different port counts for which channel estimation is performed, rather than 1 that is the number of the CSI-RS resources.

[Method 2-1-3]

When the UE receives one or more CSI-RS resources corresponding to different numbers of CSI-RS ports from the base station and computes CSI corresponding thereto through a combination of at least one of [Method 1-1] to [Method 1-5] above, a case where multiple CSI-RS resources have an overlapping RE mapping configuration, or only a CSI-RS resource having corresponding to the largest number of CSI-RS ports is configured and the UE estimates a channel from the CSI-RS resource by using some of the CSI-RS resource according to the particular higher layer signaling with respect to a smaller number of CSI-RS ports is considered. The UE may assume that this CSI computation scheme implicitly provides smaller complexity and computation amount compared to receiving multiple non-overlapping CSI-RS resources and computing independent CSI therefor. It may be expected that although there is no explicit signaling for reducing a CPU calculation value received by the UE from the base station, such CSI report and CSI-RS resource set configurations provides a smaller CPU calculation amount compared to receiving multiple non-overlapping CSI-RS resources and computing independent CSI therefor, with respect to the same number of CSI-RS resources.

- For example, while the UE calculates a CPU value as 3 for three CSI-RS resources having two, four, and eight CSI-RS ports, respectively, the UE may consider a CPU value for the above situation as 2 that is smaller than 3 by 1. In a case where this example is normalized, if the CPU value calculated by the UE when using M CSI-RS resources is M, the UE may consider a CPU calculation value as max(1, M-1) for the above situation, and the function of max(.) may indicate the largest value among the factors in the function.
- As another example, while the UE calculates a CPU value as 3 for three CSI-RS resources having two, four, and eight CSI-RS ports, respectively, the UE may consider a CPU value for the above situation as 2. In a case where this example is normalized, if the CPU value calculated by the UE when using M CSI-RS resources is M, the UE may consider a CPU calculation value as min(M, 2) for the above situation, and the function of min(.) may indicate the smallest value among the factors in the function. The CPU value being 2 may be a value obtained under the assumption that CSI computation for one or more CSI-RS resources having multiple different numbers of CSI-RS ports, when a CSI computation restriction situation is considered, may be similar to CSI computation for two CSI-RS resources.
- As another example, while the UE calculates a CPU value as 3 for three CSI-RS resources having two, four, and eight CSI-RS ports, respectively, the UE may consider a CPU value for the above situation as 1. In a case where this example is normalized, if the CPU value calculated by the UE when using M CSI-RS resources is M, the UE may consider a CPU calculation value as min(M, 1) for the above situation, and the function of min(.) may indicate the smallest value among the factors in the function. The CPU value being 1 may be a value obtained under the assumption that CSI computation for one or more CSI-RS resources having multiple different numbers of CSI-RS ports, when a CSI computation restriction situation is considered, may be similar to CSI computation for one CSI-RS resource.
- The detailed numbers described on the above examples do not limit the disclosure, and the purpose of the disclosure is applicable without being limited to the numbers.

[Method 2-1-4]

When the UE receives one or more CSI-RS resources corresponding to different numbers of CSI-RS ports from the base station and computes CSI corresponding thereto through a combination of at least one of [Method 1-1] to [Method 1-5] above, an explicit restriction for the CSI computation may be configured for the UE in the CSI-ReportConfig so that the UE may reduce the complexity and computation amount of the CSI computation, and the UE may calculate a smaller CPU value corresponding to the computation amount. For example, a case where three CSI-RS resources are configured for the UE, the respective CSI-RS resources have two, four, and eight CSI-RS ports, the same reportQuantity is configured in values of CSI-ReportConfig corresponding to the three CSI-RS resources, and the reportQuantity includes a combination of at least one of CSI-RS resource indicator (CRI), PMI, RI, and CQI is considered. In this case, the UE may generate a CSI report by restricting the respective CRIs of the CSI-RS resources to be all the same, may generate a CSI report by restricting the respective RIs to be the same, or may apply a method of, when generating a PMI, first generating a PMI corresponding to the largest number of CSI-RS ports and then selecting and using a part of already generated PMIs as a PMI corresponding to a smaller number of CSI-RS ports. A restriction on each CSI reportquantity at the time of CSI computation is configured for the UE by the base station, thereby enabling the UE to reflect same on CPU calculation.

Multiple options for a restriction on CSI computation are defined, and at least one of the multiple options may be configured for the UE through higher layer signaling, may be activated through MAC CE, may be indicated through L1 signaling, may be notified through a combination of at least one of higher layer signaling, MAC CE, and L1 signaling, or may be fixedly defined in a specification. If the UE is notified by the base station of a restriction on multiple CSI computations or is notified of a restriction causing large reduction of the complexity and calculation amount of CSI computation even if the CSI computation is single CSI computation, the UE may calculate a low CPU value. Additionally, reportQuantity in CSI-ReportConfig may be newly defined, the base station may configure a corresponding value for the UE, and the UE may represent the CSI computation restriction, based on the value.

- For example, while the UE calculates a CPU value as 3 for three CSI-RS resources having two, four, and eight CSI-RS ports, respectively, the UE may consider a CPU value for the above situation as 2 that is smaller than 3 by 1 if the UE additionally considers the method of restricting CRIs to be the same, the method of restricting RIs to be the same, or the restriction on PMIs. In a case where this example is normalized, if the CPU value is M when the UE has no restriction on the same CRI usage, the UE may consider a CPU value as max(1, M-1) by additionally considering the method of restricting CRIs to be the same, the method of restricting RIs to be the same, or the restriction on PMIs, and the function of max(.) may indicate the largest value among the factors in the function.

- As another example, while the UE calculates a CPU value as 3 for three CSI-RS resources having two, four, and eight CSI-RS ports, respectively, the UE may consider a CPU value for the above situation as 2 if the UE additionally considers the method of restricting CRIs to be the same, the method of restricting RIs to be the same, or the restriction on PMIs. In a case where this example is normalized, if the CPU value is M when the UE has no restriction on the same CRI usage during CSI computation for two or more different numbers of CSI-RS ports, the UE may consider a CPU value as min(M, 2) by additionally considering the method of restricting CRIs to be the same, the method of restricting RIs to be the same, or the restriction on PMIs, and the function of min(.) may indicate the smallest value among the factors in the function. The CPU value being 2 may be a value obtained under the assumption that CSI computation for one or more CSI-RS resources having multiple different numbers of CSI-RS ports, when a CSI computation restriction situation is considered, may be similar to CSI computation for two CSI-RS resources.

- As another example, while the UE calculates a CPU value as 3 for three CSI-RS resources having two, four, and eight CSI-RS ports, respectively, the UE may consider a CPU value for the above situation as 1 if the UE additionally considers the method of restricting CRIs to be the same, the method of restricting RIs to be the same, or the restriction on PMIs. In a case where this example is normalized, if the CPU value is M when the UE has no restriction on the same CRI usage during CSI computation for two or more different numbers of CSI-RS ports, the UE may consider a CPU value as min(M, 1) by additionally considering the method of restricting CRIs to be the same, the method of restricting RIs to be the same, or the restriction on PMIs, and the function of min(.) may indicate the smallest value among the factors in the function. The CPU value being 1 may be a value obtained under the assumption that CSI computation for one or more CSI-RS resources having multiple different numbers of CSI-RS ports, when a CSI computation restriction situation is considered, may be similar to CSI computation for one CSI-RS resource.

- As another example, if multiple restrictions among the CSI computation restrictions described above are considered, the UE may calculate an occupied CPU value as 1.

- The detailed numbers described on the above examples do not limit the disclosure, and the purpose of the disclosure is applicable without being limited to the numbers.

The UE may report whether the UE supports at least one of [Method 2-1-1] to [Method 2-1-3] above, to the base station through UE capability signaling. A command to calculate a CPU value according to a combination of at least one of [Method 2-1-1] to [Method 2-1-3] above may be configured for the UE by the base station through higher layer signaling, may be activated through MAC CE, may be indicated through L1 signaling, or may be notified through a combination of at least one of higher layer signaling, MAC CE, and L1 signaling. Alternatively, the UE may follow a scheme fixedly supported in a specification.

In a case where a CPU value is calculated described above, if it is assumed that a maximally available CPU value for the UE in a corresponding cell is $N_{CPU}$ and a currently occupied (or used) CPU value is L, the UE may consider a currently available CPU value as $N_{CPU}$ - L. In this case, if the UE calculates a CSI report corresponding one or more CSI-RS resources having different numbers of CSI-RS ports and reports the CSI report to the base station, a case where a CPU value is calculated using a combination of at least one of [Method 2-1-1] to [Method 2-1-4] above and the calculated CPU value M' is greater than the currently available CPU value, that is, a case where M' > $N_{CPU}$ - L is considered. The UE may adjust a final used CPU value to be within the currently available CPU value $N_{CPU}$ - L by considering a priority through the following various methods, and may not transmit some CSI or a CSI report including the CSI. As described above, CSI transmitted or not transmitted when M' > $N_{CPU}$ - L may be determined by the following methods.

[Method 2-2-1]

As described above, when a CPU value calculated to calculate a CSI report corresponding one or more CSI-RS resources having different numbers of CSI-RS ports and report the CSI report to the base station is greater than a currently available CPU value, the UE may not transmit CSI for the smallest number of CSI-RS ports first.

[Method 2-2-2]

As described above, when a CPU value calculated to calculate a CSI report corresponding one or more CSI-RS resources having different numbers of CSI-RS ports and report the CSI report to the base station is greater than a currently available CPU value, the UE may not transmit CSI for the largest number of CSI-RS ports first.

[Method 2-2-3]

As described above, when a CPU value calculated to calculate a CSI report corresponding one or more CSI-RS resources having different numbers of CSI-RS ports and report the CSI report to the base station is greater than a currently available CPU value, the UE may not transmit particular CSI first, the particular CSI being indicated through a method of configuring by the base station through higher layer signaling, activating through MAC-CE, indicating through L1 signaling, or notifying by using at least one of higher layer signaling, MAC CE, and L1 signaling. For example, the particular CSI may correspond to the smallest number of ports, the largest number of ports, the number of ports for which the base station is currently operating, or the smallest or largest number of ports for which the base station is currently operating. However, the disclosure is not limited to the description.

[Method 2-2-4]

As described above, when a CPU value calculated to calculate a CSI report corresponding one or more CSI-RS resources having different numbers of CSI-RS ports and report the CSI report to the base station is greater than a currently available CPU value, the UE may add the CSI computation restrictions one by one to reduce the CPU value and, when the calculated CPU value becomes equal to the currently available CPU value, no additional CSI computation restriction may be added. That is, the UE may perform CSI computation by adding a CSI computation restriction until a CPU value calculated by applying the restriction is smaller than or equal to the currently available CPU value. If the calculated CPU value is not smaller than the currently available CPU value even though the UE has applied all the CSI computation restrictions, the UE may not transmit a corresponding CSI report.

[Method 2-2-5]

As described above, when a CPU value calculated to calculate a CSI report corresponding one or more CSI-RS resources having different numbers of CSI-RS ports and report the CSI report to the base station is greater than a currently available CPU value, the UE may not transmit the CSI report, and when the currently available CPU value becomes larger than or equal to the CPU value for the CSI computation, may receive a CSI request from the base station again and transmit a CSI report. To this end, when the currently available CPU value becomes larger than or equal to the CPU value for the CSI computation, the UE may notify of this situation by transmitting a particular uplink signal to the base station.

The UE may report whether the UE supports at least one of [Method 2-2-1] to [Method 2-2-5] above, to the base station through UE capability signaling. A combination of at least one of [Method 2-2-1] to [Method 2-2-5] above may be configured for the UE by the base station through higher layer signaling, may be activated through MAC CE, may be indicated through L1 signaling, or may be notified through a combination of at least one of higher layer signaling, MAC CE, and L1 signaling. Alternatively, the UE may follow a scheme fixedly supported in a specification.

<Third embodiment: Activated CSI-RS resource and CSI-RS port counting method for network energy saving>

As an embodiment of the disclosure, a CSI report and CSI resource configuration method for network energy saving in the UE and the base station is described. This embodiment may be operated in combination with other embodiments in the disclosure.

The UE may transmit, to the base station through a UE capability report, a restriction on the number of CSI-RS resources simultaneously activatable in each cell and a restriction on the number of CSI-RS ports simultaneously activatable in each cell. The UE may report, to the base station, a natural number among 1 to 32 as the number of CSI-RS resources simultaneously activatable in each cell. The UE may report, to the base station, a multiple of 8 among 8 to 128 as the number of CSI-RS ports simultaneously activatable in each cell. Whether the UE receives multiple aperiodic CSI-RS resources in one slot or receives one aperiodic CSI-RS resource in each slot, the UE may receive an aperiodic CSI-RS resource triggered through a PDCCH from the base station under the restrictions on the number of CSI-RS resources and the number of CSI-RS ports.

A particular CSI-RS resource having been activated may be differently defined according to each time domain behavior as described below, and the UE may assume that a configured number of ports have been activated in a CSI-RS resource having been activated as described below.

- With respect to an aperiodic CSI-RS resource, the UE may define that the CSI-RS resource has been activated from the end time point of the last symbol of a PDCCH including trigger information on the CSI-RS resource, to the end time point of the last symbol of PUSCH transmission including an aperiodic CSI report based on the CSI-RS resource.
- With respect to a semi-persistent CSI-RS resource, the UE may define that the CSI-RS resource has been activated for the UE from a time point at which an activation command for the CSI-RS resource is applied, to a time point at which a deactivation command is applied. In this case, the UE may receive the activation command and the deactivation command for the semi-persistent CSI-RS resource through a MAC CE. Therefore, the UE may assume that an activation or deactivation command is applied starting from 3ms after PUCCH transmission including HARQ-ACK information for reception of a MAC CE including the activation or deactivation command.
- With respect to a periodic CSI-RS resource, the UE may define that the CSI-RS resource has been activated from a time point at which the CSI-RS resource is configured through higher layer signaling, to a moment at which the higher layer signaling is released.

If a particular CSI-RS resource is used a total of N times in one or more CSI report configurations (here, N may be a natural number), when the number of activated CSI-RS resources and the number of activated CSI-RS ports are calculated, the UE may apply N times to the CSI-RS resource and the number of ports of the CSI-RS resource.

When the UE reports CSI computed based on CSI-RS resources having different numbers of CSI-RS ports which may be triggered by the base station for network energy saving management as described above, the UE may calculate the number of activated CSI-RS resources and the number of activated CSI-RS ports through the following various methods according to which type of CSI-RS resource is used, or which CSI reporting scheme is used.

[Method 3-1]

When the UE reports, to the base station, a CSI report calculated based on CSI-RS resources having different numbers of CSI-RS ports, even though the CSI-RS resources having different numbers of CSI-RS ports are transmitted from the base station to the UE while RE mapping thereof overlap with each other as described above, the UE may calculate the number of activated CSI-RS resources and the number of activated CSI-RS ports by using individual CSI-RS resources and corresponding numbers of CSI-RS ports similarly to a conventional method. In this case, the UE may newly define a UE capability report to support a greater maximum value as a maximum number of activatable CSI-RS resources and a maximum number of activatable CSI-RS ports per cell.

For example, when the UE receives respective CSI-RSs of two, four, and eight ports from the base station on overlapping RE positions, the UE may consider the number of activated CSI-RS resources and the number of activated CSI-RS ports individually for each of the CSI-RS resources. Therefore, the UE may calculate a total of 3 as the number of activated CSI-RS resources, and calculate a total of 14 as the number of activated CSI-RS ports.

[Method 3-2]

When the UE reports, to the base station, a CSI report calculated based on CSI-RS resources having different numbers of CSI-RS ports, if the CSI-RS resources having different numbers of CSI-RS ports are transmitted from the base station to the UE while RE mapping thereof overlap with each other as described above, the UE may perform calculation by considering all the overlapping CSI-RS resources as one activated CSI-RS resource. In addition, with respect to activated CSI-RS ports, since different numbers of CSI-RS ports are estimated and accordingly, CSI is individually calculated, the UE may perform calculation by using individual numbers of activated CSI-RS ports similarly to a conventional method.

For example, when the UE receives respective CSI-RSs of two, four, and eight ports from the base station on overlapping RE positions, the UE may calculate 1 as the number of activated CSI-RS resources, but consider the number of activated CSI-RS ports individually for each of the CSI-RS resources. Therefore, the UE may calculate a total of 1 as the number of activated CSI-RS resources, and calculate a total of 14 as the number of activated CSI-RS ports.

[Method 3-3]

When the UE reports, to the base station, a CSI report calculated based on CSI-RS resources having different numbers of CSI-RS ports, even if the CSI-RS resources having different numbers of CSI-RS ports are transmitted from the base station to the UE while RE mapping thereof overlap with each other as described above, the UE may calculate the number of activated CSI-RS resources as the number of individual CSI-RS resources similarly to a conventional method. In addition, the UE may estimate a channel for CSI-RS ports corresponding to a maximum value, and reuse estimation information on the CSI-RS ports corresponding to the maximum value with respect to CSI-RS ports corresponding to a smaller value. Therefore, the UE may calculate the number of activated CSI-RS ports by using the number of the CSI-RS ports corresponding to the maximum value.

For example, when the UE receives respective CSI-RSs of two, four, and eight ports from the base station on overlapping RE positions, the UE may calculate the number of activated CSI-RS resources individually for each of the CSI-RS resources, but calculate the number of activated CSI-RS ports, based on the CSI-RS ports corresponding to the maximum value. Therefore, the UE may calculate a total of 3 as the number of activated CSI-RS resources, and calculate a total of 8 as the number of activated CSI-RS ports.

[Method 3-4]

When the UE reports, to the base station, a CSI report calculated based on CSI-RS resources having different numbers of CSI-RS ports, if the CSI-RS resources having different numbers of CSI-RS ports are transmitted from the base station to the UE while RE mapping thereof overlap with each other as described above, the UE may perform calculation by considering all the overlapping CSI-RS resources as one activated CSI-RS resource. In addition, the UE may estimate a channel for CSI-RS ports corresponding to a maximum value, and reuse estimation information on the CSI-RS ports corresponding to the maximum value with respect to CSI-RS ports corresponding to a smaller value. Therefore, the UE may calculate the number of activated CSI-RS ports by using the number of the CSI-RS ports corresponding to the maximum value.

For example, when the UE receives respective CSI-RSs of two, four, and eight ports from the base station on overlapping RE positions, the UE may calculate 1 as the number of activated CSI-RS resources, but calculate the number of activated CSI-RS ports, based on the CSI-RS ports corresponding to the maximum value. Therefore, the UE may calculate a total of 1 as the number of activated CSI-RS resources, and calculate a total of 8 as the number of activated CSI-RS ports.

[Method 3-5]

When the UE reports, to the base station, a CSI report including CSI computed based on CSI-RS resources having different numbers of CSI-RS ports, the UE may calculate the number of activated CSI-RS resources and the number of activated CSI-RS ports in different methods according to a CPU calculation scheme considered above. For example, when the UE increase a CPU value by the number of CSI-RS resources during CPU calculation, the UE may calculate the number of activated CSI-RS resources and the number of activated CSI-RS ports by considering individual CSI-RS resources. As another example, when the UE performs CPU calculation for multiple CSI-RS resources by using a smaller number than the actual number of CSI-RS resources or 1 as the number of CSI-RS resources, the UE may also calculate the number of activated CSI-RS resources as 1 and calculate the number of CSI-RS ports by considering one CSI-RS resource.

[Method 3-6]

When the UE reports, to the base station, a CSI report calculated based on CSI-RS resources having different numbers of CSI-RS ports, the UE may calculate the number of activated CSI-RS resources and the number of activated CSI-RS ports in different methods according to CSI report and CSI-RS resource set configurations considered above. For example, if CSI report and CSI-RS resource set configurations are received by the UE from the base station through [Method 1-5] above (one CSI-RS resource set may be associated with one value of CSI-ReportConfig, and a CSI-RS resource having the largest number of ports among multiple different numbers of ports is configured in the CSI-RS resource set), the UE may calculate the number of activated CSI-RS resources as 1 and calculate the number of activated CSI-RS ports as the maximum number of ports among the multiple different numbers of CSI-RS ports.

When at least one among [Method 3-1] to [Method 3-6] is used, a case where one or more CSI-RS resources configured by the base station through higher layer signaling when the UE reports, to the base station, a CSI report calculated based on CSI-RS resources having different numbers of CSI-RS ports are used a total of N times (here, N may be a natural number) in one or more CSI report configurations is considered. The UE may apply N times when calculating the number of activated CSI-RS resources and the number of activated CSI-RS ports for a corresponding CSI-RS resource and the number of ports of the CSI-RS resource.

In addition, with respect to [Method 1-1], when a CSI-RS resource having the largest number of CSI-RS ports among different numbers of CSI-RS ports is defined (e.g., the CSI-RS resource may be defined as a CSI-RS resource having eight CSI-RS ports that corresponds to the maximum number when channel estimation is to be performed on two, four, and eight CSI-RS ports), the CSI-RS resource is commonly included in multiple CSI-RS resource sets, and the UE performs channel estimation and CSI computation for some or all CSI-RS ports of the CSI-RS resource and reports a result to the base station according to which CSI report configuration is associated with each of the CSI-RS resource sets, a case where at least one among [Method 3-1] to [Method 3-6] is used is considered. Since the CSI-RS resource is used in three (N=3) different CSI report configurations, the UE considers 3 as the number of activated CSI-RS resources through multiplication by 3, but may consider 14, which is the sum of 2, 4, and 8 that are the numbers of CSI-RS ports used for channel estimation, as the number of activated CSI-RS ports rather than considering 24, which is 3 times eight CSI-RS ports.

In addition, with respect to [Method 1-2], a case where multiple CSI-RS resources having different numbers of CSI-RS ports are included in one CSI-RS resource set (e.g., a first CSI-RS resource having two CSI-RS ports, a second CSI-RS resource having four CSI-RS ports, and a third CSI-RS resource having eight CSI-RS ports are included in one CSI-RS resource set), and the one CSI-RS resource set is configured in multiple different values of CSI-ReportConfig (e.g., the one CSI-RS resource set is associated with three CSI report configurations, and respective CSI reports include configurations for CSI computation for two CSI-RS ports, four CSI-RS ports, and eight CSI-RS ports) is considered. Although the first, second, and third CSI-RS resources are associated with three (N=3) different CSI report configurations, when considering the number of activated CSI-RS resources for the first, second, and third CSI-RS resources, the UE may consider a total of 3 by calculating only the number of the CSI-RS resources rather than consider a total of 9 by multiplying the three different CSI-RS resources by 3. In addition, similarly, the UE may calculate a total of 14 as the number of activated CSI-RS ports by summing respective numbers of ports of the CSI-RS resources rather than consider a total of 48 by multiplying the two CSI-RS ports, four CSI-RS ports, and eight CSI-RS ports by 3, respectively.

In addition, with respect to [Method 1-2], a case where a CSI-RS resource having the largest number of CSI-RS ports among different numbers of CSI-RS ports is defined (e.g., the CSI-RS resource may be defined as a CSI-RS resource having eight CSI-RS ports that corresponds to the maximum number when channel estimation is to be performed on two, four, and eight CSI-RS ports), the single CSI-RS resource is included in one CSI-RS resource set, and the one CSI-RS resource set is configured in multiple different values of CSI-ReportConfig (e.g., the one CSI-RS resource set is associated with three CSI report configurations, and respective CSI reports include configurations for CSI computation for two CSI-RS ports, four CSI-RS ports, and eight CSI-RS ports) is considered. Although a CSI-RS resource configured to have the largest number of ports among different numbers of CSI-RS ports is associated with three (N=3) different CSI report configurations, when calculating the number of activated CSI-RS resources, the UE may consider a total of 3 through multiplication by 3 equal to the number of CSI reports. In addition, the UE may calculate a total of 14 as the number of activated CSI-RS ports by summing respective numbers of ports of the CSI-RS resources used for channel estimation rather than consider a total of 24 by multiplying the eight CSI-RS ports by 3.

In addition, with respect to [Method 1-3], when multiple CSI-RS resource sets are associated with one CSI report configuration, a CSI-RS resource having the largest number of CSI-RS ports among different numbers of CSI-RS ports is defined (e.g., the CSI-RS resource may be defined as a CSI-RS resource having eight CSI-RS ports that corresponds to the maximum number when channel estimation is to be performed on two, four, and eight CSI-RS ports), and the single CSI-RS resource is commonly included in the multiple CSI-RS resource sets, the UE may estimate channels for some or all CSI-RS ports for the same CSI-RS resource according to a particular signaling from the base station as in [Method 1-3] above and compute individual CSI for each channel estimation. In this case, although one CSI-RS resource is associated with one CSI report configuration, when calculating the number of activated CSI-RS resources for the CSI-RS resource, the UE may consider 3 (N=3) rather than 1, and also consider the number of activated CSI-RS ports as 14 that is the total sum of the number of ports used for each CSI computation rather than calculate same as 8 configured in the CSI-RS resource.

In addition, with respect to [Method 1-5], when one value of CSI-ReportConfig is associated with one CSI-RS resource set, a CSI-RS resource having the largest number of CSI-RS ports among different numbers of CSI-RS ports is defined (e.g., the CSI-RS resource may be defined as a CSI-RS resource having eight CSI-RS ports that corresponds to the maximum number when channel estimation is to be performed on two, four, and eight CSI-RS ports), and the single CSI-RS resource is included in the CSI-RS resource set, the UE may estimate channels for some or all CSI-RS ports for the same CSI-RS resource according to a particular signaling from the base station and compute individual CSI for each channel estimation. In this case, although one CSI-RS resource is associated with one CSI report configuration, when calculating the number of activated CSI-RS resources for the CSI-RS resource, the UE may consider 3 (N=3) rather than 1, and also consider the number of activated CSI-RS ports as 14 that is the total sum of the number of ports used for each CSI computation rather than calculate same as 8 configured in the CSI-RS resource.

The UE may report whether the UE supports at least one of [Method 3-1] to [Method 3-6] above, to the base station through UE capability signaling. A combination of at least one of [Method 3-1] to [Method 3-6] above may be configured for the UE by the base station through higher layer signaling, may be activated through MAC CE, may be indicated through L1 signaling, or may be notified through a combination of at least one of higher layer signaling, MAC CE, and L1 signaling. Alternatively, the UE may follow a scheme fixedly supported in a specification.

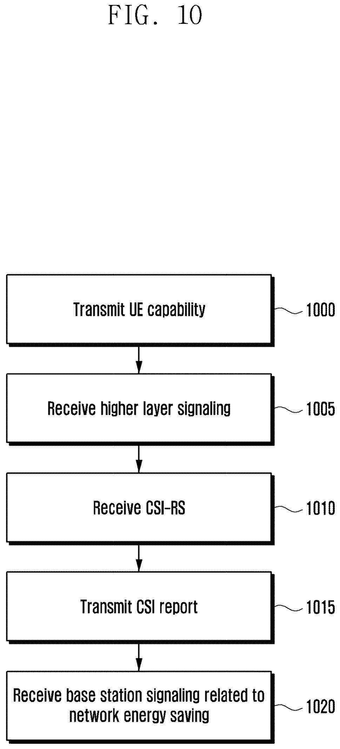

FIG. 10 is a diagram illustrating an operation of a UE according to an embodiment of the disclosure.

A UE may transmit a UE capability to a base station (operation 1000). The UE capability which may be transmitted by the UE may include at least one of whether the UE supports various CSI report and CSI-RS resource set configuration methods mentioned in the above embodiments, various CPU calculation methods, and at least one method which may be considered when the number of activated CSI-RS ports and the number of activated CSI-RS resources are calculated, a maximum CPU value per additional particular cell, a maximum number of CSI-RS ports per cell or entire cells, and a maximum number of CSI-RS resources per cell or entire cells.

The UE may receive higher layer signaling from the base station (operation 1005). The higher layer signaling which may be received by the UE from the base station may be configuration information including at least one of various CSI report and CSI-RS resource set configuration methods mentioned in the above embodiments, various CPU calculation methods, at least one method which may be considered when the number of activated CSI-RS ports and the number of activated CSI-RS resources are calculated, a maximum CPU value per additional particular cell, a maximum number of CSI-RS ports per cell or entire cells, and a maximum number of CSI-RS resources per cell or entire cells.

The UE may receive a CSI-RS from the base station (operation 1010). A CSI-RS resource of the CSI-RS may follow various methods for configuring a CSI report and a CSI-RS resource set for the UE by the base station, mentioned in the above embodiments. For example, the UE may receive multiple CSI-RS resources having different numbers of ports, or may receive one CSI-RS resource, but perform channel estimation based on different numbers of CSI-RS ports for the CSI-RS resource through a CSI report configuration.

The UE may transmit a CSI report to the base station (operation 1015). The UE may determine whether to transmit a part or entirety of the CSI report to the base station according to various CSI report and CSI-RS resource set configuration methods and various CPU calculation methods mentioned in the above embodiments, and a UCI form for the CSI report may vary according to various methods of considering a restriction during CSI computation. In addition, the UE may perform channel estimation for CSI-RS resources corresponding to different numbers of CSI-RS ports and calculate and report corresponding CSI, or may receive one CSI-RS resource, but perform channel estimation based on different numbers of CSI-RS ports for the CSI-RS resource through a CSI report configuration, and calculate and report corresponding CSI. The UE may transmit the CSI report for scheduling and network operation for network energy saving of the base station, and the base station may perform scheduling and network operation for the purpose of network energy saving, based on the corresponding information.

The UE may receive base station signaling related to network energy saving from the base station (operation 1020). For example, the base station may receive the CSI report of the UE and transmit signaling related to network energy saving. The base station may transmit signaling related to network energy saving to UEs capable of reporting the above CSI report, or all normal UEs. The signaling related to network energy saving may be, for example, signaling obtained by combining at least one of higher layer signaling, MAC CE, and L1 signaling, such as DCI, which indicates that downlink transmission power is to be controlled and is transmitted from the base station, and the signaling may be UE-specific or UE common. As another example, signaling indicating that the power of the base station is cut off may not be excluded. The UE having received such signaling may understand that the base station performs a network energy saving operation.

A flowchart described above illustrates an exemplified method implementable according to the principle of the disclosure, and a method illustrated in the flowchart of this specification may be variously modified. For example, a series of operations are illustrated, but various operations in each drawing may overlap with each other, occur in parallel, occur in a different sequence, or occur several times. In another example, an operation may be omitted or replaced with another operation.

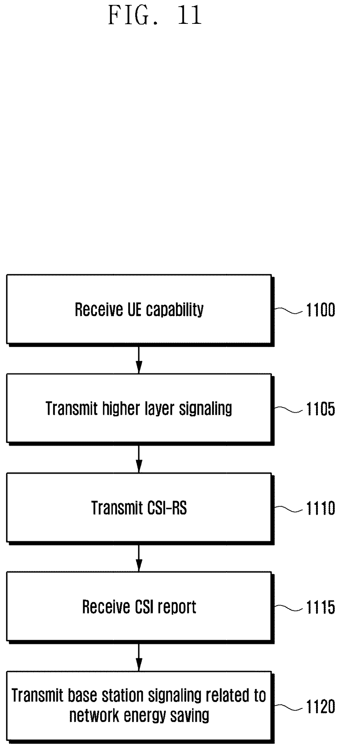

FIG. 11 is a diagram illustrating an operation of a base station according to an embodiment of the disclosure.

A base station may receive a UE capability from a UE (operation 1100). The UE capability which may be received by the base station may include at least one of whether the UE supports a CSI report and CSI-RS resource set configuration method mentioned in the above embodiments, a CPU calculation method, and at least one method which may be considered when the number of activated CSI-RS ports and the number of activated CSI-RS resources are calculated, a maximum CPU value per additional particular cell, a maximum number of CSI-RS ports per cell or entire cells, and a maximum number of CSI-RS resources per cell or entire cells.

The base station may transmit higher layer signaling to the UE (operation 1105). The higher layer signaling which may be transmitted by the base station to the UE may be configuration information including at least one of a CSI report and CSI-RS resource set configuration method mentioned in the above embodiments, a CPU calculation method, at least one method which may be considered when the number of activated CSI-RS ports and the number of activated CSI-RS resources are calculated, a maximum CPU value per additional particular cell, a maximum number of CSI-RS ports per cell or entire cells, and a maximum number of CSI-RS resources per cell or entire cells.

The base station may transmit a CSI-RS to the UE (operation 1110). A CSI-RS resource of the CSI-RS may follow a method for configuring a CSI report and a CSI-RS resource set for the UE by the base station, mentioned in the above embodiments. For example, the base station may transmit multiple CSI-RS resources having different numbers of ports, or the base station transmits one CSI-RS resource, but the UE may perform channel estimation based on different numbers of CSI-RS ports for the CSI-RS resource through a CSI report configuration.

The base station may receive a CSI report from the UE (operation 1115). The CSI report may correspond to a part or the entirety of a CSI report configured as a CSI report determined by the UE to the base station according to a CSI report and CSI-RS resource set configuration method and a CPU calculation method, mentioned in the above embodiments. In addition, a UCI form included in the CSI report may vary according to the method of considering a restriction during CSI computation. In addition, the CSI report may include CSI based on channel estimation for CSI-RS resources corresponding to different numbers of CSI-RS ports, or CSI according to a result of transmitting one CSI-RS resource, but performing channel estimation based on different numbers of CSI-RS ports for the CSI-RS resource through a CSI report configuration. The UE may perform corresponding CSI report for scheduling and network operation for network energy saving of the base station, and the base station may perform scheduling and network operation for the purpose of network energy saving, based on the corresponding information.

The base station may transmit base station signaling related to network energy saving to the UE (operation 1120). For example, the base station may receive the CSI report of the UE, and transmit signaling to UEs capable of reporting the above CSI report or all normal UEs, the signaling obtained by combining at least one of higher layer signaling, MAC CE, and L1 signaling, such as DCI, which indicates that downlink transmission power is to be controlled. The signaling may be UE-specific or UE common. As another example, signaling indicating that the power of the base station is cut off may not be excluded. The UE having received such signaling may understand that the base station performs a network energy saving operation.

A flowchart described above illustrates an exemplified method implementable according to the principle of the disclosure, and a method illustrated in the flowchart of this specification may be variously modified. For example, a series of operations are illustrated, but various operations in each drawing may overlap with each other, occur in parallel, occur in a different sequence, or occur several times. In another example, an operation may be omitted or replaced with another operation.

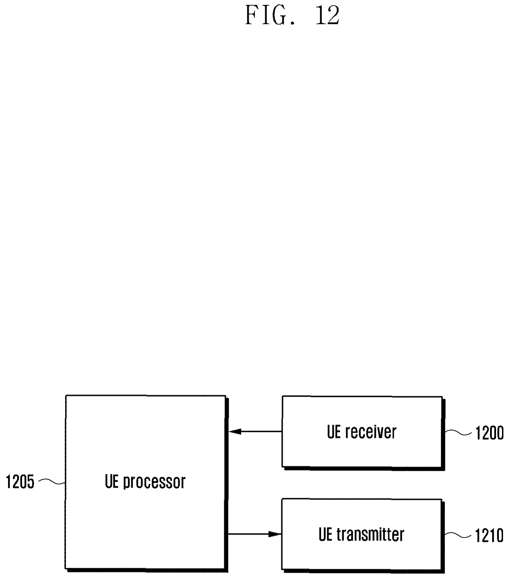

FIG. 12 illustrates a structure of a UE in a wireless communication system according to an embodiment of the disclosure.

Referring to FIG. 12, the UE may include a transceiver, which refers to a UE receiver 1200 and a UE transmitter 1210 as a whole, memory (not illustrated), and a UE processor 1205 (or UE controller or processor). The UE transceiver 1200 and 1210, the memory, and the UE processor 1205 may operate according to the above-described communication methods of the UE. Components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with base stations. The signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes so that the UE can operate according to the above-described embodiments. The processor may include multiple processors, and the processor may perform operations of controlling the components of the UE by executing programs stored in the memory.

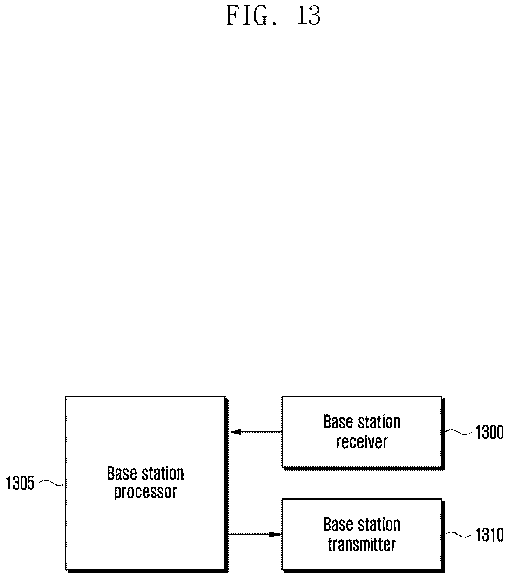

FIG. 13 illustrates a structure of a base station in a wireless communication system according to an embodiment of the disclosure.

Referring to FIG. 13, the base station may include a transceiver, which refers to a base station receiver 1300 and a base station transmitter 1310 as a whole, a memory (not illustrated), and a base station processor 1305 (or base station controller or processor). The base station transceiver 1300 and 1310, the memory, and the base station processor 1305 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with UEs. The signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes so that the base station can operate according to the above-described embodiments of the disclosure. The processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method performed by a terminal in a communication system, the method comprising:

   receiving, from a base station, configuration information for channel state information (CSI) reporting, the configuration information including information on channel state information-reference signal (CSI-RS) resources and a CSI report configuration based on a subset of CSI-RS ports of all CSI-RS ports of the CSI-RS resources;
   obtaining CSI based on the subset of CSI-RS ports of the CSI-RS resources; and
   transmitting the obtained CSI to the base station.

2. The method of claim 1, wherein a CSI processing unit (CPU) for the CSI reporting is determined based on a sum of numbers of CSI-RS resources corresponding to respective one or more CSI reports based on the subset of CSI-RS ports.

3. The method of claim 1, wherein a number of activated CSI-RS resources for the CSI reporting is determined based on numbers of CSI-RS resources corresponding to respective one or more CSI reports based on the subset of CSI-RS ports.

4. The method of claim 1, wherein a number of activated CSI-RS ports for the CSI reporting is determined based on a sum of numbers of CSI-RS ports corresponding to respective one or more CSI reports based on the subset of CSI-RS ports.

5. A method performed by a base station in a communication system, the method comprising:

   transmitting, to a terminal, configuration information for channel state information (CSI) reporting, the configuration information including information on channel state information-reference signal (CSI-RS) resources and a CSI report configuration based on a subset of CSI-RS ports of all CSI-RS ports of the CSI-RS resources; and
   receiving CSI from the terminal,
   wherein the CSI is based on the subset of CSI-RS ports of the CSI-RS resources.

6. The method of claim 5, wherein a CSI processing unit (CPU) for the CSI reporting is determined based on a sum of numbers of CSI-RS resources corresponding to respective one or more CSI reports based on the subset of CSI-RS ports.

7. The method of claim 5, wherein a number of activated CSI-RS resources for the CSI reporting is determined based on number of CSI-RS resources corresponding to respective one or more CSI reports based on the subset of CSI-RS ports.

8. The method of claim 5, wherein a number of activated CSI-RS ports for the CSI reporting is determined based on a sum of numbers of CSI-RS ports corresponding to respective one or more CSI reports based on the subset of CSI-RS ports.

9. A terminal in a communication system, the terminal comprising:

   multiple transceivers; and
   a controller comprising one or more processors connected to the multiple transceivers,
   wherein the controller is configured to:

receive, from a base station, configuration information for channel state information (CSI) reporting, the configuration information including information on channel state information reference-signal (CSI-RS) resources and a CSI report configuration based on a subset of CSI-RS ports of all CSI-RS ports of the CSI-RS resources;

obtain CSI based on the subset CSI-RS ports of the CSI-RS resources; and transmit the obtained CSI to the base station.

10. The terminal of claim 9, wherein a CSI processing unit (CPU) for the CSI reporting is determined based on a sum of numbers of CSI-RS resources corresponding to respective one or more CSI reports based on the subset of CSI-RS ports.

11. The terminal of claim 9, wherein a number of activated CSI-RS resources for the CSI reporting is determined based on number of CSI-RS resources corresponding to each of one or more CSI reports based on the subset of CSI-RS ports.

12. The terminal of claim 9, wherein a number of activated CSI-RS ports for the CSI reporting is determined based on a sum of numbers of CSI-RS ports corresponding to respective one or more CSI reports based on the subset of CSI-RS ports.

13. A base station in a communication system, the base station comprising:

multiple transceivers; and
a controller comprising one or more processors connected to the multiple transceivers,
wherein the controller is configured to:

transmit, to a terminal, configuration information for channel state information (CSI) reporting, the configuration information including information on channel state information-reference signal (CSI-RS) resources and a CSI report configuration based on a subset of CSI-RS ports of all CSI-RS ports of the CSI-RS resources; and
receive CSI from the terminal, and
wherein the CSI is based on the subset CSI-RS ports of the CSI-RS resources.

14. The base station of claim 13, wherein a CSI processing unit (CPU) for the CSI reporting is determined based on a sum of numbers of CSI-RS resources corresponding to respective one or more CSI reports based on the subset CSI-RS ports.

15. 16. The base station of claim 13, wherein a number of activated CSI-RS resources for the CSI reporting is determined based on number of CSI-RS resources corresponding to each of one or more CSI reports based on the subset CSI-RS ports, and
wherein a number of activated CSI-RS ports for the CSI reporting is determined based on a sum of numbers of CSI-RS ports corresponding to respective one or more CSI reports based on the subset CSI-RS ports.

# FIG. 1

One subframe (110)

$N_{symb}^{subframe,\mu}$ OFDM symbols

1 OFDM symbols (102)

1 subcarrier (103)

$K = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

Frequency

Time

$\bar{l}=0$

$\bar{l}=14 \cdot 2^{\mu} - 1$

$K=0$

# FIG. 2

FIG. 3

# FIG. 4

# FIG. 5

duration
(504)

Frequecy
resources
(503)

UE bandwidth
part
(510)

Slot (520)

Frequency

Time

Control resource set#1 (501)

Control resource set#2 (502)

EP 4 676 127 A1

# FIG. 6

1 symbol
(601)

1 PRB
(602)

DMRS
(605)

CCE
(604)

REG
(603)

FIG. 7

EP 4 676 127 A1

700
CSI-AperiodicTriggerState #1

CSI-AperiodicTriggerState #2

CSI-AperiodicTriggerState #N

N = 128 (max)

705
CSI-AssociatedReportConfigInfo #1

CSI-AssociatedReportConfigInfo #2

CSI-AssociatedReportConfigInfo #M

M = 16 (max)

710
CSI-ReportConfig

resourceForChannel ~715

nzp-CSI-RS
720

725
CSI-ResourceConfig

730
NZP-CSI-RS-ResourceSet #1

NZP-CSI-RS-ResourceSet #2

NZP-CSI-RS-ResourceSet #L

L = 16 (max)

735

FIG. 8

FIG. 9

# FIG. 10

Transmit UE capability — 1000

Receive higher layer signaling — 1005

Receive CSI-RS — 1010

Transmit CSI report — 1015

Receive base station signaling related to network energy saving — 1020

# FIG. 11

```
┌─────────────────────────────┐
│     Receive UE capability   │ ∿ 1100
└─────────────────────────────┘
              │
              ▼
┌─────────────────────────────┐
│  Transmit higher layer signaling │ ∿ 1105
└─────────────────────────────┘
              │
              ▼
┌─────────────────────────────┐
│        Transmit CSI-RS      │ ∿ 1110
└─────────────────────────────┘
              │
              ▼
┌─────────────────────────────┐
│       Receive CSI report    │ ∿ 1115
└─────────────────────────────┘
              │
              ▼
┌─────────────────────────────────────┐
│ Transmit base station signaling related to │ ∿ 1120
│        network energy saving         │
└─────────────────────────────────────┘
```

# FIG. 12

UE processor 1205

UE receiver 1200

UE transmitter 1210

FIG. 13

1305 — Base station processor

Base station receiver — 1300

Base station transmitter — 1310

**EP 4 676 127 A1**

## INTERNATIONAL SEARCH REPORT

| International application No. |
|---|
| **PCT/KR2024/004524** |

| | |
|---|---|
| **A.** | **CLASSIFICATION OF SUBJECT MATTER** |
| | **H04W 52/02**(2009.01)i; **H04B 7/06**(2006.01)i; **H04W 72/231**(2023.01)i; **H04L 5/00**(2006.01)i |

According to International Patent Classification (IPC) or to both national classification and IPC

| | |
|---|---|
| **B.** | **FIELDS SEARCHED** |

Minimum documentation searched (classification system followed by classification symbols)

H04W 52/02(2009.01); H04B 17/336(2015.01); H04B 7/0417(2017.01); H04B 7/0456(2017.01); H04B 7/06(2006.01); H04L 12/24(2006.01); H04L 5/00(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI-RS(channel state information-reference signal), CSI-RS 포트(CSI-RS port), 일부(part), CSI-RS 자원(CSI-RS resource), 활성화(activation)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | WO 2022-047759 A1 (QUALCOMM INCORPORATED et al.) 10 March 2022 (2022-03-10)<br>See paragraphs [0090]-[0091], [0108] and [0120]; and figure 12. | 1,3-5,7-9,11-13,15 |
| Y | | 2,6,10,14 |
| Y | US 2023-0087177 A1 (LG ELECTRONICS INC.) 23 March 2023 (2023-03-23)<br>See paragraph [0721]. | 2,6,10,14 |
| A | WO 2022-144778 A1 (TELEFONAKTIEBOLAGET LM ERICSSON (PUBL)) 07 July 2022 (2022-07-07)<br>See page 38, line 27 – page 47, line 17; and figures 14-19. | 1-15 |
| A | US 2022-0166486 A1 (APPLE INC.) 26 May 2022 (2022-05-26)<br>See paragraphs [0168]-[0199]; and figures 9-13. | 1-15 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 July 2024** | **15 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/004524** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2022-0045902 A1 (TELEFONAKTIEBOLAGET LM ERICSSON (PUBL)) 10 February 2022 (2022-02-10)<br>See paragraphs [0159]-[0163]; and figures 22-24. | 1-15 |

Form PCT/ISA/210 (second sheet) (July 2022)

## INTERNATIONAL SEARCH REPORT
### Information on patent family members

International application No.

**PCT/KR2024/004524**

| Patent document cited in search report | | | Publication date (day/month/year) | Patent family member(s) | | | Publication date (day/month/year) |
|---|---|---|---|---|---|---|---|
| WO | 2022-047759 | A1 | 10 March 2022 | None | | | |
| US | 2023-0087177 | A1 | 23 March 2023 | CN | 114731193 | A | 08 July 2022 |
| | | | | EP | 4106220 | A1 | 21 December 2022 |
| | | | | JP | 2023-508964 | A | 06 March 2023 |
| | | | | JP | 7461481 | B2 | 03 April 2024 |
| | | | | KR | 10-2022-0050936 | A | 25 April 2022 |
| | | | | KR | 10-2508712 | B1 | 14 March 2023 |
| | | | | US | 11515918 | B2 | 29 November 2022 |
| | | | | US | 11770170 | B2 | 26 September 2023 |
| | | | | US | 11901993 | B1 | 13 February 2024 |
| | | | | US | 2022-0239358 | A1 | 28 July 2022 |
| | | | | US | 2024-0056154 | A1 | 15 February 2024 |
| | | | | WO | 2021-162517 | A1 | 19 August 2021 |
| WO | 2022-144778 | A1 | 07 July 2022 | CN | 116711222 | A | 05 September 2023 |
| | | | | EP | 4268380 | A1 | 01 November 2023 |
| | | | | JP | 2024-503263 | A | 25 January 2024 |
| | | | | US | 2024-0007164 | A1 | 04 January 2024 |
| US | 2022-0166486 | A1 | 26 May 2022 | CN | 114747275 | A | 12 July 2022 |
| | | | | EP | 4046440 | A1 | 24 August 2022 |
| | | | | EP | 4046440 | A4 | 02 November 2022 |
| | | | | KR | 10-2022-0087544 | A | 24 June 2022 |
| | | | | WO | 2021-159316 | A1 | 19 August 2021 |
| US | 2022-0045902 | A1 | 10 February 2022 | DK | 3295585 | T3 | 28 September 2020 |
| | | | | EP | 3295585 | A1 | 21 March 2018 |
| | | | | EP | 3295585 | B1 | 09 September 2020 |
| | | | | EP | 3758250 | A1 | 30 December 2020 |
| | | | | EP | 3758250 | B1 | 13 March 2024 |
| | | | | ES | 2832454 | T3 | 10 June 2021 |
| | | | | US | 10164825 | B2 | 25 December 2018 |
| | | | | US | 11095500 | B2 | 17 August 2021 |
| | | | | US | 11750445 | B2 | 05 September 2023 |
| | | | | US | 2016-0337178 | A1 | 17 November 2016 |
| | | | | US | 2019-0109761 | A1 | 11 April 2019 |
| | | | | US | 2023-0421433 | A1 | 28 December 2023 |
| | | | | WO | 2016-181331 | A1 | 17 November 2016 |

Form PCT/ISA/210 (patent family annex) (July 2022)